# NEW EUROPEAN PATENT SPECIFICATION

(11) **EP 2 631 222 B2**
(45) Date of publication and mention of the opposition decision: **20.10.2021**
(45) Mention of the grant of the patent: 30.05.2018
(21) Application number: 11833864.9
(22) Date of filing: 20.10.2011
(51) Int. Cl.: F23G 5/30, F23G 5/46, F23G 5/50, C04B 7/24, C04B 7/43

(54) **WASTE-PROCESSING APPARATUS**
ABFALLVERARBEITUNGSVORRICHTUNG
APPAREIL DE TRAITEMENT DES DÉCHETS

(30) Priority: 05.11.2010 CN 201010532911; 21.10.2010 CN 201010514607
(43) Date of publication of application: 28.08.2013
(73) Proprietor: Kawasaki Jukogyo Kabushiki Kaisha, Kobe-shi, Hyogo 650-8670 (JP); Anhui Conch Group Company Limited, Wuhu, Anhui 241070 (CN); Anhui Conch Kawasaki Engineering Company Limited, Anhui 241070 (CN); Building Material Design and Research Institute of Anhui Conch, Anhui 241070 (CN); Anhui Conch Kawasaki Energy Conservation Equipment Manufacturing Company Limited, Anhui 241070 (CN); Anhui Tongling Conch Cement Company Limited, Anhui 244000 (CN)
(72) Inventor: GUO, Wensan, Anhui 241070 (CN); LI, Shunan, Anhui 241070 (CN); HE, Chengfa, Anhui 241070 (CN); ZHANG, Changle, Anhui 241070 (CN); LI, Daming, Anhui 241070 (CN); LI, Qunfeng, Anhui 244000 (CN); WANG, Kechun, Anhui 241070 (CN); LI, Zhaohui, Anhui 241070 (CN); XIAO, Jieyu, Anhui 241070 (CN); CHENG, Xiaobing, Anhui 244000 (CN); YANG, Changqing, Anhui 241070 (CN); HAYASHI, Toshikazu, Hyogo 650-8670 (JP); INOUE, Eiji, Hyogo 650-8670 (JP); KATAHATA, Tadashi, Hyogo 650-8670 (JP); KATOH, Sadafumi, Hyogo 650-8670 (JP); ICHITANI, Noboru, Hyogo 650-8670 (JP); HASHIMOTO, Atsushi, Hyogo 650-8670 (JP); TOSHIHIRO, Jun, Hyogo 650-8670 (JP)
(74) Representative: Arnold & Siedsma
(86) International application number: PCT/CN2011/081081
(87) International publication number: WO 2012/051958

(56) References cited:
- EP-A1- 1 390 316
- WO-A1-02/090283
- CN-A- 101 434 461
- CN-A- 101 786 809
- CN-A- 101 786 809
- CN-U- 202 030 667
- DE-A1- 4 303 170
- JP-A- 7 206 487
- JP-A- H07 206 487
- JP-A- 2002 255 601
- JP-A- 2006 300 408
- JP-A- 2007 205 640
- US-A- 4 295 823
- US-A- 4 640 681
- US-B1- 6 595 772
- H. SCHMIDTHALS: "Luftvergasung von Altreifen zur integrierten stofflichen und energetischen Nutzung im Klinkerprozess", Fakultät für Maschinenbau, 2001, pages 1-150,
- FRIEDRICH W. LOCHER: "Grundlagen der Herstellung und Verwendung", Zement, 2000, pages 1-8, ISBN: 978-3-7640-0400-2
- "Merkblatt über die Besten verfügbaren Techniken in der Zement-, Kalk- und Manesiumoxidindustrie Umweltbundesamt", Umwelt Bundes Amt, May 2010 (2010-05), pages 1-499,
- Quittkat W. G. et al.: "Brennstoffersparnis bei der Zementproduktion durch Pyrolyse", Zement-Kalk-Gips, 8 June 2017 (2017-06-08), pages 259-263,
- Hans Martens: "Fachbuch für Lehre und Praxis", RECYCLINGTECHNIK, October 2010 (2010-10), Heidelberg ISBN: 978-3-8274-2640-6

## Description

### Technical Field

The present invention relates to a system comprising a waste treatment facility and a cement production facility installed in a vicinity of each other and which utilizes a calciner for cement to sanitary treat wastes.

### Background Art

In recent years, needs for sanitary treatment the waste are increased along with the enhancement of the living standards in, for example, developing countries, and it is predicted to increase the amount of the incinerated waste, while problems of larger costs and longer construction period required for the construction of the general waste incineration plant are caused. Further, it is required to carry out assessments of impacts by the operations of the incineration plant over the surroundings and to disclose information to the neighboring residents, which require longer time prior to the start of the construction. Further, a problem of shortage of landfills for ash generated in a waste incinerator is arisen in Japan, and an installation of an ash melting furnace, an establishment of recycling method for the ash and the like are indispensable requisites in the case where a new waste incineration plant is constructed.

On the other hand, there has conventionally been a movement for utilizing flammable waste as a part of fuels in the cement plant, in order to reduce the costs for manufacturing cements, and for example, it is proposed to profitably utilize an existing cement production facility to sanitary treat the wastes, as disclosed in Patent Document 1. In such a proposed example, the waste is gasified in a gasification furnace, and char and ash are separated from the generated pyrolysis gas, and then, the pyrolysis gas is supplied to a cement kiln (burning furnace) and the char and the ash are supplied to a preheater.

While the aforementioned conventional example allows, more specifically, utilizing the pyrolysis gas generated in the gasification furnace as a part of the fuel gas as well as allowing to utilize the char and the ash as raw materials for the cement, each of the both products must be separated to be supplied to the cement production facility through different routes, which requires complicated system.

Meanwhile, calorific value of the waste is generally within the range around 1,000 to 3,000 kcal/kg, which is relatively lower than the heat generated by the fuel ordinarily employed in in the cement kiln (lower calorific value 5,000 to 7,000 kcal/kg in case of coal), and thus a mixed combustion of the pyrolysis gas derived from the waste causes reduced temperature in the inside of the kiln, which may cause a fear for adversely deteriorating the fuel consumption.

Further, there is a fear that the presence of water vapor derived from the waste and contained in the pyrolysis gas provides harmful influence to the property of the cement clinker, and there is also a concern that a heat spot is generated when the pyrolysis gas bums in the cement kiln to produce slags.

To clarify these concerns, the inventors of the present application developed the technology, in which the pyrolysis gas generated in the gasification furnace is supplied to the calciner or the burning furnace (kiln) of the cement production facility together with char and ash, and a patent application has been already filed (Patent Document 2). Since the temperature in the calciner is relatively lower than the temperature in the kiln, namely around 900 degrees C, the pyrolysis gas and the char supplied there are profitably utilized as fuels, and the ash is utilized as a part of the cement raw materials.

In addition, since the exhaust gas of high temperature from the kiln is entered to the calciner to create a jet flow blowing the cement raw materials up, the pyrolysis gas supplied there is also blown up while burning, thereby being transported to the preheater with water vapor. Thus, there is no concern to cause deterioration in the property of the clinker or the problem of slagging in the kiln.
[Patent Document 1] Japanese Patent No. 3838951
[Patent Document 2] China Patent Application Unexamined Laid-Open No. 101434461 Specification

US 4,640,681 A discloses a furnace for wastes installed in vicinity of a cement production facility. Also US 6,595,772 B1, WO 02/090283 A1, DE 4303170 A1, JP-H-07206487 A and JP 2007-205640 A disclose similar furnaces.

### Summary of Invention

However, even if the pyrolysis gas is supplied in the calciner as described above, an increase in the quantity of the gas causes the following defective situations. For example, when the operation of the gasification furnace is stopped due to some of troubles, the supply of the pyrolysis gas from this furnace to the calciner is also stopped, which leads to insufficient supply of the fuel in the calciner even if the quantity of coal is increased, and thus this may possibly obstruct the operation of the furnace.

In addition, since the amount of heat generated from the waste is considerably different depending on the type of the waste, the amount of the heat generated by the pyrolysis gas considerably varies, and thus the amount of heat generated from the waste also considerably varies, depending on the type of the waste accumulated in the disposal site on a day-to-day basis. Thus, if the quantity of the pyrolysis gas supplied to the calciner is larger, the temperature in the calciner also varies by the variation of the amount of heat generated by the combustion of the gas.

More specifically, if the quantity of the pyrolysis gas supplied as the fuel to the calciner is larger, there is a fear to obstruct the stable operation of the cement production facility.

On the basis of the above-described situations it is an object of the present invention to provide ensured stability for an operation of a cement production facility, in which a pyrolysis gas generated in a gasification furnace is transported to the cement production facility while containing entrained char and ash.

In order to achieve the above-described object, the present invention is directed to provide a system in accordance to claims 1 and 2, and a method in accordance to claim 12. Provided is a gasification furnace configured to gasify a waste to generate a pyrolysis gas; and a gas transport path configured to transport the pyrolysis gas generated in the gasification furnace to a calciner for cement in the aforementioned cement production facility while containing entrained char and ash, wherein a flow rate of the pyrolysis gas from the aforementioned gasification furnace is limited to a level below a predetermined flow rate ratio (relative flow rate) over a flow rate of an exhaust gas discharged from the aforementioned calciner.

Once the pyrolysis gas is generated from the waste in the gasification furnace in the waste treatment facility having such a configuration, the pyrolysis gas is transported while containing entrained char and ash to the cement calcining path through the gas transport path, and is burned in the calciner. While the amount of heat generated by the combustion of the pyrolysis gas and the char at this time relatively considerably fluctuates according to type of the wastes, the fluctuation of the temperature in the calciner can be moderated by limiting the flow rate of the pyrolysis gas to a level below a predetermined relative flow rate (flow rate ratio) over the flow rate of the exhaust gas discharged from the calciner.

In addition, even if the operation of the gasification furnace is accidentally stopped by some trouble to suspend the supply of the pyrolysis gas and the char, the operating state of the calciner would be maintained by increasing the amount of the supply of the coal to compensate it, provided that the amount of the decomposed gas and the char is originally smaller. More specifically, stable operation of the cement production facility can be achieved by providing limited flow rate of the pyrolysis gas transported from the gasification furnace to the calciner as being below a predetermined relative flow rate over the flow rate of the exhaust gas flow rate discharged from the calciner.

According to the invention, the flow rate of the pyrolysis gas flowing through the aforementioned gas transport path is established so as to provide the flow rate ratio therewith over the flow rate of the exhaust gas discharged from the aforementioned calciner as equal to or lower than 0.3, and the input of the waste to the gasification furnace is suitably adjusted to achieve the above-described flow rate ratio. The flow rate of the fluidizing air may also be adjusted in the case that the gasification furnace is a fluidized bed-type gasification furnace to suitably control the quantity of the generated pyrolysis gas. For example, the discharge of the waste into the gasification furnace and the flow rate of the fluidizing air may be suitably adjusted according to the level of the negative pressure in the gasification furnace and/or the calciner to maintain the flow rate ratio to be below the above-described flow rate ratio.

In general, the inside of the calciner of the cement production facility is in a negative pressure state by drawing the kiln exhaust gas and the like, and if the pyrolysis gas is entered therein, the negative pressure is reduced according to the flow rate of the entered pyrolysis gas. Therefore, if the input of the waste or the flow rate of the fluidizing air would be adjusted according to such a negative pressure in the calciner and/or the level of the negative pressure in the gasification furnace provided by drawing the pyrolysis gas induced by the negative pressure in the calciner, the quantity of the generated pyrolysis gas can be controlled to maintain the flow rate thereof into the calciner at the level of the flow rate below a predetermined rate.

In addition, if the pyrolysis gas is able to be suitably drawn from the gasification furnace by means of the negative pressure in the calciner to maintain the negative pressure state in the gas transport path and/or in the gasification furnace, unwanted leakage of the pyrolysis gas to the exterior could be preferably prevented. While it would be common to install a blower on the way through the gas transport path in order to transport the pyrolysis gas and to maintain the inside of the gasification furnace serving as the origin of the transport at a negative pressure as described above, the pyrolysis gas derived from the waste contains the char and the ash, which partially adhere to and are deposited on impellers of a blower, or cause abrasions of the impellers themselves, leading to possibly causing troubles.

While an elimination of the char and the ash from the pyrolysis gas may be considered in order to prevent the above-described trouble, an additional elimination apparatus for this purpose is required, and in addition, the elimination causes decreased temperature of the eliminated char and ash, which are any more not suitable in the recycling in the later operation. In addition, there is a possibility that the outlet of the blower is locally in a state of the positive pressure, which may cause a concern that the pyrolysis gas spouts out to the outside of the duct in the worst case.

Taking this aspect into consideration, the relative flow rate of the pyrolysis gas flowing through the gas transport path over the flow rate of the exhaust gas discharged from the calciner is preferably, for example, equal to or lower than 0.2. When the ratio of the flow rate is reduced to this level, the relative flow rate of the additional pyrolysis gas over the flow rate of the kiln exhaust gas originally flowing in the calciner and the like becomes considerably lower, so that the state of the sufficiently larger negative pressure is maintained in the calciner, and this negative pressure can draw the pyrolysis gas and the state of the negative pressure can also be maintained in the gasification furnace.

Therefore, it is necessary to provide a blower in the way of the gas transport path, and there is no concern for causing the failure of the blower resulted from the adhesion and the deposition of the char and the ash in the pyrolysis gas. This also achieves the condition of the positive pressure at the outlet of the blower, and thus there is no concern that the pyrolysis gas spouts out in the worst case.

Here, the types of the gasification furnace include: a low temperature-gasification configuration, typically including fluidized bed type furnace and kiln type furnace; and a high temperature-gasification configuration, typically including shaft type furnace, and the use of the low temperature-gasification configuration provides the advantageous merit for allowing the recovery of iron and aluminum from the waste without oxidation thereof. In addition, the fluidized bed type furnace provides higher reaction efficiency (gasification efficiency) than the kiln type furnace and also provides an advantage of allowing compact size apparatus, and therefore the fluidized bed type furnace is preferable.

Further, the gasification furnace may be configured to be capable of being supplied with an auxiliary fuel, so that the bed temperature of the gasification furnace can be maintained at the required level even if the waste calorific value is lower. Pulverized coal may be specifically employed as such an auxiliary fuel, which may be supplied to the fluidized bed from the upper side. In this case, the use of the excessively finer grains of the pulverized coal causes easy discharge from the gasification furnace by being entrained with the flow of the pyrolysis gas, and on the other hand, the use of the excessively larger grains of the pulverized coal causes rapid sedimentation of the grains in the fluidized bed, which likely leads to insufficient contribute to the combustion. From this point of view, mean particle diameter of the pulverized coal is preferably around 0.1 to 3 mm.

In addition to above, the auxiliary fuel is not limited to the pulverized coal, and other than that, any type of the fuel may be available as long as the fuel is burned in the fluidized bed, such as, for example, scrap tires, plastics, wood chips, charcoals, sludge carbides, and the like.

In addition, an ejector device may be disposed on the way through the gas transport path so as to blow compressed air, which allows removing the char and the ash adhered to and deposited on the wall of the gas transport path. In addition, a gas inlet in communication with the gas transport path for introducing the pyrolysis gas to the calciner may be configured so as to be slanted downward relative to the horizontal plane, in order to moderate adhesion and deposition of the char and the ash.

Further, even if the cement production facility is configured to have no calciner so that an exhaust gas at high temperature is entered from a burning furnace to a cement preheater, the flow rate of the pyrolysis gas from the gasification furnace may be limited to a level below a predetermined flow rate ratio over the flow rate of the exhaust gas discharged from the preheater as described above, so that the state of sufficiently larger negative pressure is maintained in the preheater and this negative pressure can draw the pyrolysis gas to maintain the inside of the gasification furnace in the negative pressure state.

Meanwhile, since the kiln exhaust gas of high temperature is entered into the calciner to create the jet flow as described above, there is a risk that the pyrolysis gas introduced there may be likely entrained with the flow of the kiln exhaust gas to be discharged to the preheater before achieving the sufficient combustion. Further, the calciner also includes, in addition to the structure for introducing the kiln exhaust gas of high temperature, the alternative structure of introducing the exhaust gas (air) of high temperature from the clinker cooler, which may also let the pyrolysis gas being blown through the calciner to be discharged without sufficient combustion, if it is entrained with the mainstream of the cooler exhaust gas.

Taking this point into consideration, when the exhaust gas of high temperature is entered to the aforementioned calciner from the burning furnace or the clinker cooler of the cement production facility, the pyrolysis gas may be preferably introduced from the aforementioned gas transport path to the inside of this calciner in a mode where the flow of the pyrolysis gas causes no direct interference with the mainstream of the aforementioned high temperature exhaust gas.

The use of this mode achieves that, even if the exhaust gas at high temperature is entered from the cement burning furnace or the clinker cooler in the calciner of the cement production facility, the blowing of the pyrolysis gas entrained with the exhaust gas through the calciner can be prevented by introducing the pyrolysis gas in the mode without direct interference with the mainstream of this strong exhaust gas, so that the pyrolysis gas and the char can be sufficiently burned in the calciner. As an example, it is preferable that the pyrolysis gas is burned at a temperature equal to or higher than 850 degrees C for at least two seconds while remaining in the calciner.

As an example, when the calciner has a cylindrical peripheral wall and when the mainstream of the exhaust gas flow from the aforementioned burning furnace or the clinker cooler is formed from one end of the cylindrical peripheral wall toward the other end along the cylinder axis direction, the aforementioned peripheral wall may be equipped with a gas inlet, which is directed to the circumference direction to supply the pyrolysis gas so that the supplied gas swirls around the aforementioned cylinder axis. The pyrolysis gas introduced to the inside of the calciner in this way swirls around the mainstream of the exhaust gas flow coming from the aforementioned burning furnace and the like, and thus there is no direct interference with this mainstream.

Besides, the peripheral wall of the calciner generally extends along the longitudinal direction, and the exhaust gas is entered from the burning furnace and/or the clinker cooler at the bottom end of the peripheral wall to form the blowing-up jet flow. On the contrary, the pyrolysis gas from the gas inlet may be introduced downward at the predetermined sloping angle over the horizontal plane, and having such configuration, the unwanted flow of the pyrolysis gas caused by being entrained with the exhaust gas can be prevented. Since the ordinary gas transport path from the gasification furnace to the cement production facility is basically horizontal, it may be configured to provide at least downward slope at the gas inlet.

However, excessively steep downward slope may result in reduced swirling component (horizontal rate) of the flow of the pyrolysis gas, and therefore the slope of the gas inlet over the horizontal plane is equal to or lower than 40 degrees at a maximum, and may preferably be equal to or lower than 30 degrees. While higher velocity of flow of the pyrolysis gas from the aforementioned gas inlet achieves effective prevention for the blockage due to the above-described accumulated material, excessively higher velocity of the flow leads to increased pressure loss at the gas inlet, and therefore the gas may be introduced at a velocity of flow of about 5 to 30 m/s.

Here, while the configuration, in which the exhaust gas from the burning furnace is entered to the bottom end of the peripheral wall of the calciner as disclosed in the above-described conventional technology (Patent Document 2), is ordinarily provided with an air inlet for introducing the combustion air in the lower section of the peripheral wall, the combustion air may alternatively be introduced through this air inlet so as to create a flow, which swirls along the direction same as the direction of the flow of the pyrolysis gas. This achieves enhanced mixing state of the swirling flow of pyrolysis gas with the swirling flow of the combustion air while mutually enhancing the momentum of flows, to provide enhanced ignitionability and combustibility of the pyrolysis gas.

In order to achieve this, it is preferable that the air inlet may also be provided to extend downward at the predetermined inclination angle over the horizontal plane and a gas inlet may be provided above and spaced apart from the air inlet at a predetermined distance. The inclination angle of the air inlet may be generally equivalent to, or slightly smaller than, the inclination angle of the gas inlet.

This results in the creation of the swirling flow of the combustion air disposed spaced apart at an appropriate distance below the swirling flow of the pyrolysis gas, and the flow of the exhaust gas blowing up in the calciner preferentially causes an interference with the swirling flow of the combustion air. This also allows reducing unwanted interference between the mainstream of the exhaust gas and the swirling flow of the pyrolysis gas. The swirling flow of the combustion air pushed up by the mainstream of the rising exhaust gas, in turn, pushes the swirling flow of the pyrolysis gas up, so that the both swirling flows become mixed well while swirling upward in the inside of the calciner in a helical spiral fashion.

In addition, a duct for flowing the exhaust gas from the burning furnace is connected to the bottom end of the aforementioned calciner, and this duct normally extends downward and then is bent to form an "L"-shape redirecting toward the entrance of the burning furnace. Then, the flow of the exhaust gas, which passes through the duct having the "L"-shape to change the flow direction toward the upside, may possibly be deviated toward the side of the burning furnace by the force exerted from the inner wall of the duct, and therefore the gas inlet may be provided in the peripheral wall in the side opposite to the side of the burning furnace.

Further, a port for supplying the ordinarily employed fuel such as pulverized coal or heavy oil may be provided in vicinity of the gas inlet in the peripheral wall of the aforementioned calciner. It is expected that the presence of the fuel port allows preferential ignition of the fuel having higher ignitionability than the pyrolysis gas to provide a fire source, which enhances the ignitionability of the pyrolysis gas. In this case, in order to reduce a consumption of air by the combustion of the pulverized coal or the heavy oil or the like, the supplying quantity of those fuels may be reduced.

Furthermore, when two or more of the gasification furnaces are provided in the aforementioned waste treatment facility, two or more of the gas transport paths for transporting the pyrolysis gas from the respective gasification furnaces may be provided to configure that these respective gas transport paths are individually in communication with two or more of the gas inlets in the peripheral wall of the aforementioned calciner. In this case, two or more of the gas inlets may be arranged spaced apart from each other in the circumference direction.

In the different point of view, the present invention relates to a cement production facility, comprising: a burning furnace for cement; a clinker cooler for cooling the burned product; and a calciner, in which an exhaust gas of high temperature is entered from either of the burning furnace or the clinker cooler, the cement production facility further comprises: a gas transport path for transporting a pyrolysis gas from the waste containing entrained char and ash; and a gas supply means for introducing the pyrolysis gas from this gas transport path to the inside of the calciner in a mode where the flow of the pyrolysis gas causes no direct interference with the mainstream of the exhaust gas flow from the aforementioned burning furnace or the like in the calciner. The utilization of this cement production facility achieves the hygienic treatment of the waste at lower cost.

As described above, according to the present invention, the waste are gasified in the gasification furnace, and the generated pyrolysis gas containing chars and ash entrained is transported to the calciner or the like of the cement production facility to allow the utilization as the fuel. In this configuration, the flow rate of the pyrolysis gas may be adjusted to a level below a predetermined flow rate ratio over the flow rate of the exhaust gas from the calciner as being below the predetermined flow rate ratio to reduce the fluctuation of the temperature in the calciner, so that the stability in the operation of the cement production facility can be ensured. In addition, the pyrolysis gas may be transported by utilizing the negative pressure in the calciner to maintain the state of the negative pressure in the inside of the gasification furnace.

Further, when the pyrolysis gas is supplied to the calciner, the use of the mode where the flow thereof causes no direct interference with the mainstream of the exhaust gas come from the burning furnace or the clinker cooler can prevent the blowing through of the pyrolysis gas, so that the sufficient combustion can be achieved in the calciner.

### Brief Description of the Drawings

[Fig. 1] Fig. 1 is a systematic diagram of a waste treatment facility and a cement production facility according to first embodiment of the present invention.
[Fig. 2A] Fig. 2A is a front view of a calciner in the view of seeing a rotary kiln in the right side in the cement production facility.
[Fig. 2B] Fig. 2B is a right side view of the calciner in the view of seeing the calciner from the side of the rotary kiln.
[Fig. 2C] Fig. 2C is a diagram of a calciner according to a modified embodiment, representing similarly as in Fig. 2B.
[Fig. 3A] Fig. 3A is an enlarged front view of the lower section of the calciner.
[Fig. 3B] Fig. 3B is an enlarged right side view of the lower section of the calciner.
[Fig. 3C] Fig. 3C is an enlarged left side view of the lower section of the calciner.
[Fig. 3D] Fig. 3D is an enlarged plan view of the lower section of the calciner, omitting a section of the calciner.
[Fig. 4A] Fig. 4A is a schematic diagram of the calciner, showing results of computational fluid dynamics (CFD) simulation for a flow of a kiln exhaust gas in the calciner.
[Fig. 4B] Fig. 4B is a schematic diagram of the calciner representing similarly as Fig. 4A, showing the simulated flow of combustion air.
[Fig. 5A] Fig. 5A is a diagram of the calciner of modified embodiment provided with two gas inlets, representing similarly as in Fig. 3A.
[Fig. 5B] Fig. 5B is a diagram of the calciner of modified embodiment provided with two gas inlets, representing similarly as in Fig. 3B.
[Fig. 5C] Fig. 5C is a diagram of the calciner of modified embodiment provided with two gas inlets, representing similarly as in Fig. 3C.
[Fig. 5D] Fig. 5D is a diagram of the calciner of modified embodiment provided with two gas inlets, representing similarly as in Fig. 3D.
[Fig. 6] Fig. 6 is a graphic diagram, showing relations of the gas flow velocity in the horizontal direction over the inclination angle of the gas inlet.
[Fig. 7] Fig. 7 is a graphic diagram, showing transitions of non-dimensional standard deviation of CO concentrations in the direction of the height from the pyrolysis gas inlet.
[Fig. 8A] Fig. 8A is a graphic diagram, showing an example of the fluctuation in the quantity of the gas generated in the gasification furnace.
[Fig. 8B] Fig. 8B is a graphic diagram, showing an example of the fluctuation in the pressure in the calciner.
[Fig. 8C] Fig. 8C is a graphic diagram, showing results of the simulation for the pressure fluctuation in the gasification furnace.
[Fig. 9] Fig. 9 is a graphic diagram, showing results of the simulation for investigating the relation of the pressure in the gasification furnace over the flow rate ratio of the pyrolysis gas with the kiln exhaust gas.
[Fig. 10A] Fig. 10A is a graphic diagram showing correlation of the ratio of the flow rate of the total exhaust gas from the calciner over the flow rate ratio of the pyrolysis gas with the kiln exhaust gas.
[Fig. 10B] Fig. 10B is a graphic diagram showing correlation of the coal generated heat ratio in the calciner over the flow rate ratio of the pyrolysis gas with the kiln exhaust gas.
[Fig. 11] Fig. 11 is a systematic diagram of a waste treatment facility and a cement production facility according to second modified embodiment where a cooler exhaust gas is entered in the calciner, representing similarly as in Fig. 1.
[Fig. 12] Fig. 12 is a systematic diagram of a waste treatment facility and a cement production facility according to modified embodiment comprising a calciner including a swirling calcining chamber and a mixing chamber, representing similarly as in Fig. 1.
[Fig. 13] Fig. 13 is a systematic diagram of a waste treatment facility and a cement production facility according to modified embodiment where an annular bundled section is provided on the way of the peripheral wall to introduce air for re-combustion in vicinity of the bundled section, representing similarly as in Fig. 1.
[Fig. 14] Fig. 14 is a systematic diagram of a waste treatment facility and a cement production facility according to modified embodiment having no calciner, representing similarly as in Fig. 1.

### Description of Embodiments

### (First Embodiment)

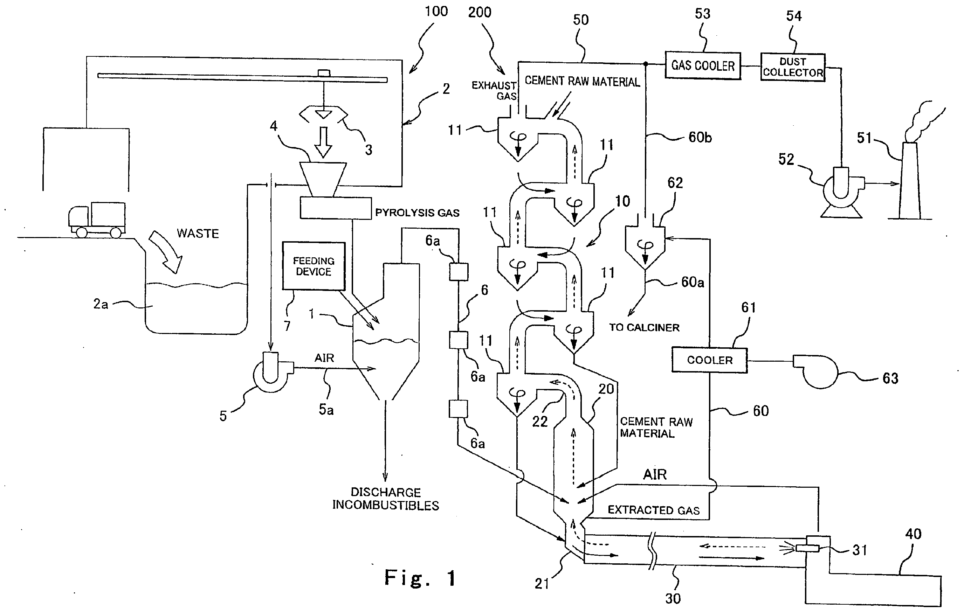

Preferable embodiments of the present invention will be described below, in reference to the annexed figures. Fig. 1 is an overall systematic diagram of a waste treatment facility 100 according to first embodiment, and a cement production facility 200, in vicinity of which the waste treatment facility is installed. In the waste treatment facility 100 shown in the left side of the diagram, the waste are thermally decomposed in a gasification furnace 1, and a mixed combustion of the generated gas (pyrolysis gas) is conducted in the burning process for the cement. Since the quantity of this pyrolysis gas is, as an example, 20,000 to 30,000 Nm³/h, which is considerably smaller as compared with the quantity of the exhaust gas from the illustrated cement production facility 200 (300,000 Nm³/h as an example), the waste treatment facility 100 can be constructed in vicinity of the existing cement plant substantially without a need for a modification of the cement plant.

### - Waste Treatment Facility -

The waste containing combustible matters such as for example, household waste from homes and the industrial waste including waste plastics are accumulated in the waste treatment facility 100. These wastes are transported through the land-transportations or the like and are supplied to a bunker 2a in a pit 2, and are then crushed by employing the crusher, which is not shown here. The waste crushed in this way are carried by a crane 3 to be supplied to a transportation device 4 having a hopper or a conveyer or the like, and are supplied to the gasification furnace 1 by means of the action of this transportation device 4.

As an example, the conveyer of the transportation device 4 is a screw conveyer, and the input per unit time of the waste to the gasification furnace 1 can be suitably adjusted by changing the working speed thereof. This allows suitably controlling the temperature condition in the gasification furnace 1 and the quantity of the generated pyrolysis gas, as well as the control of the flow rate of the fluidizing air as describe hereinafter.

More specifically, the gasification furnace 1 is, as an example, a fluidized bed type furnace, in which a bed (fluidized bed) of fluidizing sand (bed material) formed in the lower section in the furnace is fluidized by air flow. The fluidizing air transported to the fluidized bed is drawn out from the pit 2 for the waste by an electric blower 5 in the embodiment shown in the diagram to be supplied in the gasification furnace 1. Thus, the inside of the pit 2 for the waste is maintained at a negative pressure, so that bad smell is hardly leaking to the outside. In addition, a damper, which is not shown here and has an ability to adjust the level of the opening, is installed on the way of the air supply path 5a extending from the blower 5 to the gasification furnace 1, and allows controlling the quantity of the air supply with enhanced responsiveness.

Thus, the flow rate of the fluidizing air can be suitably adjusted by changing the rotating speed of the aforementioned blower 5 and adjusting the opening level of the damper. For example, when the flow rate of the fluidizing air is increased and the input of the aforementioned waste is increased, the quantity of the generated pyrolysis gas is increased while maintaining the constant bed temperature in the gasification furnace 1. The temperature of the fluidized bed in the gasification furnace 1 is ordinarily around 500 to 600 degrees C (equal to or higher than 450 degrees C at lowest). In this fluidized bed at higher temperature, the waste is thermally decomposed while being dispersed by means of the fluidizing sand. The pyrolysis (the thermal decomposition) is also accelerated by burning the portions of the wastes.

While the combustion of the portions thereof helps maintaining the suitable temperature of the fluidized bed since the generated heat of the ordinary waste is around 1,000 to 3,000 kcal/kg, this depends upon the type of the wastes, and so-called low quality waste exhibiting smaller generated heat (for example, lower than 1,000 kcal/kg) causes temperature-decrease in the fluidized bed. Thus, in order to supply an auxiliary fuel such as, for example, pulverized coal, from an input port for the waste into the gasification furnace 1, a feeding device 7 for the pulverized coal is provided in vicinity of the transportation device 4 in the gasification furnace 1 of the present embodiment, although a specific configuration is not shown here.

Mean particle diameter of the pulverized coal supplied to the fluidized bed from the upside by the feeding device 7 is designed to be around 0.1 to 3 mm.
This is because the following reason: when the particle diameter of the pulverized coal is 0.1 mm, the terminal velocity can be calculated to be about 0.9 m/s, which is slightly lower than the flow velocities of the air and the pyrolysis gas rising in the inside of the gasification furnace 1 (superficial velocity for gas basis), causing the scatter of the most of the pulverized coal, leading to substantially no contribution to the combustion.

On the other hand, excessively larger particle diameter of the pulverized coal may cause rapidly descending through the fluidized bed to falls out, leading to possibly smaller contribution to the combustion. The time required for the combustion of the pulverized coal having particle diameter of 3.0 mm in the fluidized bed at around 500 degrees C is around dozens of times as much as the time required for the particles having particle diameter of 0.1 mm, and thus it is necessary to ensure a certain amount of the residence time of particles in the bed for achieving the certain contribution to the combustion in the bed. Here, the calculated minimum fluidizing velocity of the pulverized coal having particle diameter of 3.0 mm is about 1.8 m/s, which is equivalent to the superficial velocity in the fluidized bed in the gas basis, and therefore, there would be no problem if the mean particle diameter is selected to be equal to or smaller than 3 mm.

Therefore, the temperature of the fluidized bed can be maintained within an appropriate range by suitably supplying the pulverized coal as required, and the supplied waste can be effectively thermally decomposed to be gasified. This pyrolysis gas is discharged from the upper portion of the gasification furnace 1 and is transported to the cement production facility 200 through the gas transport line 6 (gas transport path). The char and the ash, which are unburned portions, are floating in the form of small particles in the pyrolysis gas, and are transported together with the pyrolysis gas. Since the waste are crushed by the movement of the fluidizing sand in the fluidized bed type gasification furnace 1, the particle diameter of the char and the ash are easily reduced, and therefore this configuration is advantageous for preventing the adhesion and the deposition thereof.

In this embodiment, the pyrolysis gas from the gasification furnace 1 is transported by utilizing the negative pressure in the calciner 20 as will be discussed later, which achieves maintaining the the negative pressure in the inside of the gasification furnace 1 and preventing the leakage of the pyrolysis gas to the exterior. Since the pyrolysis gas can be transported by the negative pressure of the calciner 20, no air blower is provided in the gas transport line 6. Therefore, there is no concern for causing failure due to the adhesion and the deposition of the char and the ash contained in the pyrolysis gas on the impeller of the blower.

However, the char and the ash may be adhered and deposited over the inner wall of the duct of the gas transport line 6 with the passage of time, resulting in the increased pressure loss, and therefore, in this embodiment, a plurality of ejector devices 6a are disposed on the way of the gas transport line 6 with intervals therebetween that are longer than a predetermined distance. These respective ejector devices 6a are employed to intermittently blow compressed air supplied from a compressor which is not shown, so that the deposited char and ash can be blasted off In addition to above, though it is not shown here, an openable damper is provided in the gas transport line 6, which is capable of being closed when the operation of the waste treatment facility 100 is stopped.

As contrasted with the pyrolysis gas from the wastes, which is discharged from the upper portion of the gasification furnace 1 to the gas transport line 6 in this way, the incombustibles containing metallic pieces, which come from the residual substance after the pyrolysis in the gasification furnace 1, settles through the fluidizing sand, and fall out with the sand from the bottom end of the gasification furnace 1. This can be expressed in other words that the separation of the residual substances from the waste with the fluidized bed is achieved through so-called specific gravity-isolation. The sand and the incombustibles discharged from the gasification furnace 1 in this way are conveyed by a conveyer which is not shown, and the sand isolated by a classifier, which is located outside of the diagram, is returned to the gasification furnace 1. On the other hand, metallic components are sorted out from the incombustibles by employing a screening device, and the rest of the incombustibles are utilized as cement raw materials.

### - Cement Production Facility -

The cement production facility 200, in an example of the diagram, includes a general new suspension preheater (NSP) kiln. The cement raw materials are preheated in a suspension preheater 10 serving as a preheater, and then, is heated to around 900 degrees C in the calciner 20 (calcining process), and is burned at higher temperature of around 1,500 degrees C in a rotary kiln 30 serving as a burning furnace. The burned product passed through the rotary kiln 30 is quenched in an air quenching cooler 40 to form granular cement clinker, which is, in turn, sent to a finishing process that is located outside of the diagram.

The aforementioned suspension preheater 10 comprises multiple levels of cyclones 11 provided one above the other along the longitudinal direction. Each of the cyclones 11 serves as achieving heat exchange of the cement raw materials with the exhaust gas of high temperature blown from the downside level while transporting the cement raw materials with the swirling flow. This flow of the exhaust gas is formed by the exhaust gas of high temperature from the rotary kiln 30 (hereinafter referred to as kiln exhaust gas) blowing up through the calciner 20 to be supplied in the cyclone 11 of the lowest level, as will be discussed later. The kiln exhaust gas, as shown with dotted line in the diagram, ascends step after step of the multiple levels of the cyclones 11 to reach to the cyclone 11 of the uppermost level, and then is discharged to an exhaust gas line 50 therefrom.

As illustrated in the diagram, an induced draft fan 52 having larger capacitance is provided in the exhaust gas line 50 for drawing the kiln exhaust gas to deliver it to a chimney 51, and the front side of this induced draft fan 52, or in other words, in the side of the upstream of the exhaust gas flow, a gas cooler 53 (as an example, boiler) and a dust collector 54 are arranged. The induced draft fan 52 draws larger quantity of the exhaust gas from the rotary kiln 30 through the suspension preheater 10 and the calciner 20, and further, as described above, creates the negative pressure in the calciner 20, which also functions as drawing the pyrolysis gas from the gasification furnace 1.

On the other hand, in each of the cyclones 11 of the suspension preheater 10, the heat exchange of the cement raw materials with the high temperature kiln exhaust gas is achieved as described above, and then, the cement raw materials fall downward as shown with a solid line in the diagram to move to the cyclone 11 in the next level below. In this way, the cement raw materials are sufficiently preheated while sequentially passing through a plurality of cyclones 11 step by step from the uppermost level cyclone 11, to be supplied to the calciner 20 from the cyclone 11 before the lowermost level.

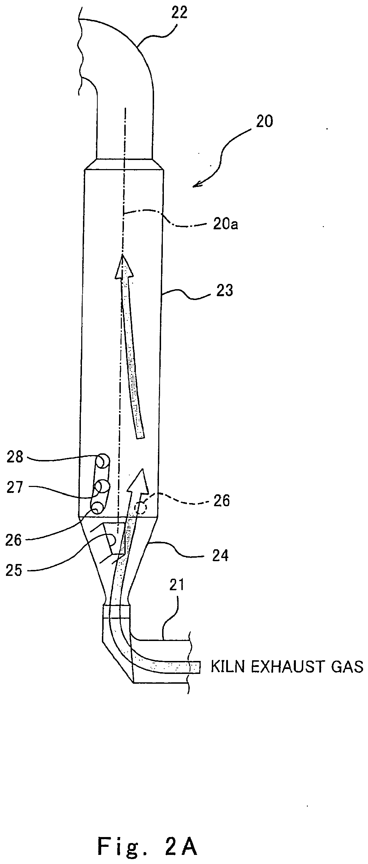

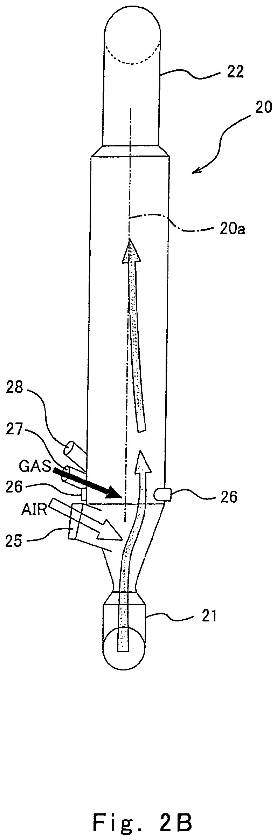

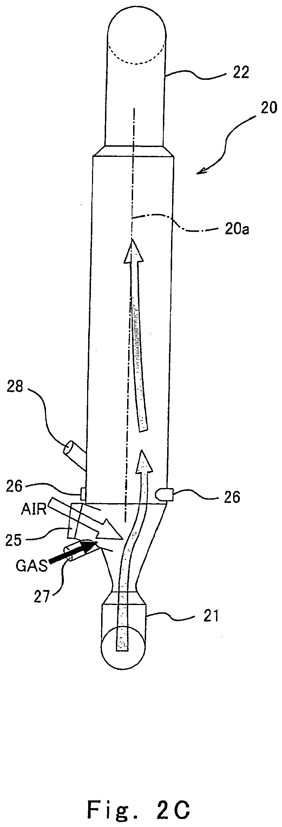

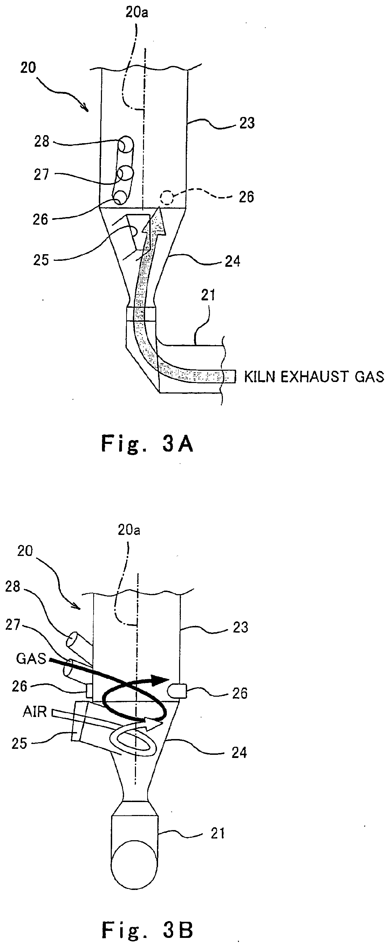

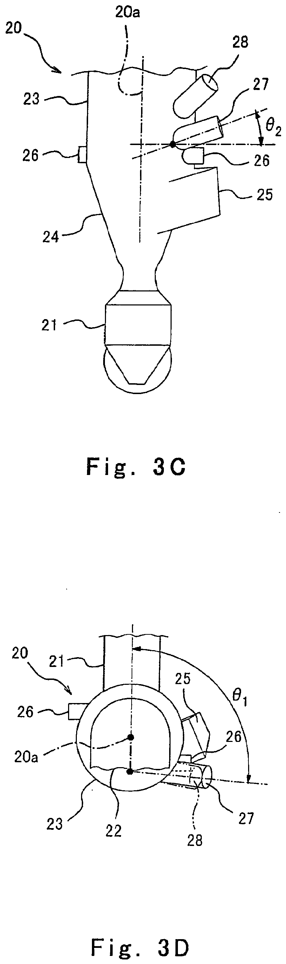

The calciner 20 is provided at the introduction section of the rotary kiln 30 so as to extend along the longitudinal direction, and, though the details will be described later in reference to Figs 2 and 3, the lower section thereof is fed with the kiln exhaust gas of high temperature entering from the rotary kiln 30, and also fed with the cement raw materials from the cyclones 11 as described above. In addition, the lower section of the calciner 20 is fed with the pyrolysis gas and/or the pulverized coal from the gasification furnace 1 described above, and further fed with the cooler exhaust gas of high temperature from the air quenching cooler 40 as air for the combustion thereof. These pyrolysis gas and combustion air are drawn by the negative pressure in the calciner 20, and in different point of view, are induced by the induced draft fan 52 together with the kiln exhaust gas.

The bottom end of the calciner 20 is connected with a lower duct 21 having generally "L"-shape so as to join it to the rotary kiln 30, and this lower duct 21 extends downward from the bottom end of the calciner 20, and then is bent toward the side of the rotary kiln 30, and further extends substantially horizontally. The kiln exhaust gas of high temperature is entered into the bottom end of the calciner 20 through this lower duct 21 to form the blowing-up jet flow. The cement raw materials are blown up by this flow of the kiln exhaust gas to be transported.

The cement raw materials are heated to around 900 degrees C while being blown up to rise through the calciner 20, so that decarboxylation of 80 to 90 % of the lime component is achieved. Then, the materials are conveyed to the cyclone 11 of the lowermost level of the suspension preheater 10 through an upper duct 22 connected to the top of the calciner 20. Here, the kiln exhaust gas is separated from the cement raw materials and is transported toward the cyclone 11 in the next level above, and on the other hand, the cement raw material falls out from the bottom end of the cyclone 11 to reach to the entrance of the rotary kiln 30.

The rotary kiln 30 is configured to include, as an example, a rotating stove having horizontally-long cylindrical shape with a length of 70 to 100 m, which is disposed to be slightly slanted downward from the entrance toward the exit thereof. The rotating stove is moderately rotated around the central axis thereof to transport the cement raw materials toward the side of the exit. This side of the exit is provided with a combustion device 31, which spouts out the combustion gas of high temperature created by the combustion of the coal, natural gas, heavy oil and the like toward the side of the entrance. The cement raw materials, which are enveloped by the combustion gas, causes a chemical reaction (cement burning reaction), and is burned until a part of the cement raw materials is in the semi-melting state.

This cement burned product is subjected to a cold blast in the air quenching cooler 40 to be quenched to create granular cement clinker. While the illustration and the detailed description are not given, the cement clinker is stored in a clinker silo, and then, gypsum and the like is added to provide suitable formulation, and after that, is pulverized by using a mil (finishing process). On the other hand, the cooler exhaust gas heated to a temperature of around 800 degrees C by drawing heat from the burned product is supplied in the calciner 20 as the combustion air as described above. More specifically, the waste heat is recovered to heat the combustion air in the calciner 20 to achieve enhancement of the thermal efficiency.

### - Detailed Configuration of Calciner -

The structure of the calciner 20 in this embodiment, and in particular the structure for suitably introducing the pyrolysis gas and the combustion air, will be described in detail below, in reference to Figs. 3A to 3D as well as the aforementioned Figs. 2A and 2B. Fig. 2A is a front view of the calciner 20 viewing the rotary kiln 30 on the right hand, and Fig. 2B is a side view thereof from the side of the rotary kiln 30 (right side view). In addition to above, Fig. 2C represents modified embodiment as will be discussed later. Figs. 3A to 3C are a front view, a right side view and a left side view, respectively, of enlarged lower section of the calciner 20, and Fig. 3D is an enlarged plan view of the lower section of the calciner 20, omitting a section of the calciner 20.

As shown in Figs. 2A and 2B, the calciner 20 has vertically extending cylindrical shape, most part thereof extending from the upper end to the lower section are provided as side wall section 23 (cylindrical peripheral wall) having substantially same diameter, and the subsequent lower section forms a tapered wall section 24, the diameter of which is decreased toward the bottom. The bottom end of this tapered wall section 24 is connected with the top end of the lower duct 21 having generally "L" shape. As described above, the kiln exhaust gas of high temperature from the rotary kiln 30 is entered as the jet flow through this lower duct 21 and blowing up through the calciner 20 from the bottom end toward the upper side thereof.

As shown by the gray arrow in Fig. 3A, the flow of the kiln exhaust gas flowing through the lower duct 21 is entered to the horizontal part of the lower duct 21 having generally "L" shape from the side of the rotary kiln 30 (right side of the diagram), and then is curved at the bent section to be directed toward the upper side. When the flow direction is changed in this way, the mainstream of the kiln exhaust gas ascending through the lower section of the calciner 20 is deviated toward the side of the rotary kiln 30 by the force exerted from the inner wall of the lower duct 21, although representing as exaggerated state in the diagram.

Thereafter, the mainstream of the kiln exhaust gas gradually moves toward the center while ascending through the calciner 20, and is influenced by the swirling flow of the combustion air to acquire the swirling component. This flow of the kiln exhaust gas reaches to the upper end of the calciner 20 while blowing the cement raw materials up, and then is flowed out to the upper duct 22 from this place. The upper duct 22 extends toward the upper side and then is curved so as to be headed toward the side opposite to the lower duct 21 to reach to the cyclone 11 of the lowermost level (see Fig. 1).

The pulverized coal serving as the fuel and the combustion air are supplied to the lower section of the calciner 20, so as to suitably interfere with such a flow of the kiln exhaust gas each other and to be suitably mixed to be heated. More specifically, as shown in enlarged views of Figs. 3A to 3C, an inlet 25 for the combustion air is provided in the tapered wall section 24 in the bottom end of the calciner 20 in the state of being tilted downward over the horizontal plane. The cooler exhaust gas of high temperature from the air quenching cooler 40 is supplied to this air inlet 25 as described above.

The inlet 25 is provided in, as shown in the near side of Fig. 3A, the front side in side wall section 23 of the calciner 20, and is directed, not toward the longitudinal axis 20a (cylindrical axis) of the center of the calciner 20, but toward the point apart from the longitudinal axis 20a by 30 to 45 degrees in the circumferential direction, viewed from the upper side as shown in Fig. 3D. Thus, the flow of the combustion air introduced in the calciner 20 from the air inlet 25 is forced to swirl along the inner circumference of the tapered wall section 24 around the longitudinal axis 20a, as indicated by white arrow in Fig. 3B.

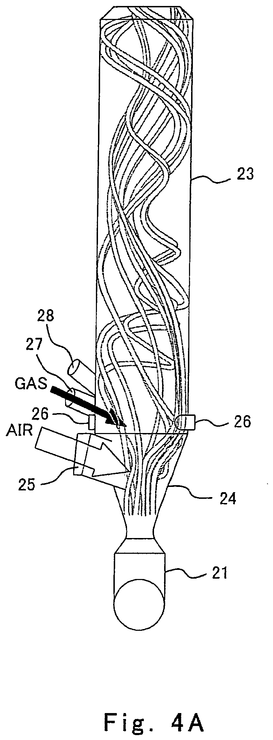

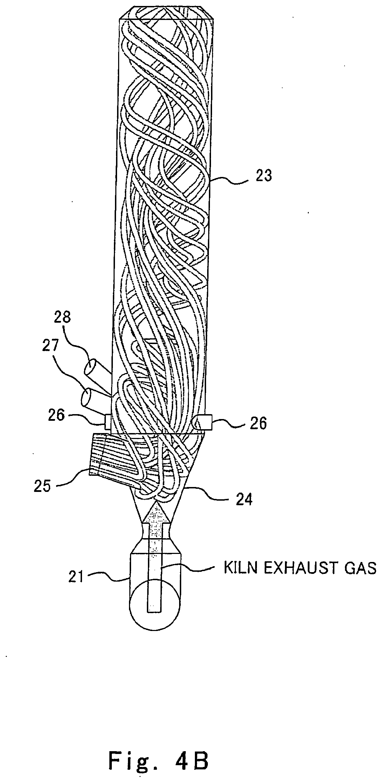

In addition, the cross-sectional geometry of the air inlet 25 is a trapezoid-like shape having longer upper side as compared with the shorter lower base side in the example of the diagram, and the oblique sides are suitably tilted in conformity to the associated slopes of the tapered wall section 24. Since the cross sectional area of the flow path of the air inlet 25 is larger than that of a fuel supply port 26 or a gas inlet 27, which will be discussed later, the flow rate through the air inlet is relatively larger. The swirling flow of the combustion air having relatively larger flow rate suitably interferes with the mainstream of the kiln exhaust gas come from the underside each other. Then, as shown in Fig. 4B, the air flow is forced to proceed toward the upper side while swirling, and on the other hand, the flow of kiln exhaust gas comes to swirl while ascending, as shown in Fig. 4A.

Figs. 4A and 4B are based on the results of the computational fluid dynamics (CFD) simulations, and schematically represent the flow of the kiln exhaust gas and the flow of the combustion air in the calciner 20 with respective stream lines, viewed from the side of the rotary kiln 30. It can be understood from Fig. 4A that the mainstream of the kiln exhaust gas, which has been entered into the calciner 20 as the jet flow from the bottom end thereof, is pushed by the flow of the combustion air introduced from the air inlet 25 of the left side (as indicated by white arrow) to be deviated toward the right side in the diagram, and then acquires the swirling component to ascend while creating a gentle spiral.

On the other hand, it can be understood from Fig. 4B that the flow of the combustion air from the air inlet 25 is pushed up by the flow of the kiln exhaust gas from the underside (indicated by gray arrow) to be directed toward the upper side while swirling in the tapered wall section 24 disposed at the bottom end of the calciner 20. While a portion of the flow of the combustion air rapidly ascends by being entrained with the mainstream of the kiln exhaust gas, some other portion of the flow creates upward spiral so as to twist around the mainstream of the kiln exhaust gas.

Thus, the supply port for the fuel 26 is provided in the lowest section of the side wall section 23 of the calciner 20 so as to cause mixing with the swirling air flow toward the upper side. Typical fuel supplied through this fuel supply port 26 includes, for example, the pulverized coal, the natural gas, the heavy oil and the like, and when the pulverized coal is employed, the coal may be transported with the air flow to be blasted into the calciner 20 from the fuel supply port 26. When the natural gas or the heavy oil is employed as the fuel, this may be injected through the fuel supply port 26 at a predetermined pressure.

As shown in each of Figs. 3A to 3C, two fuel supply ports 26 are provided in the front side and the back side of the side wall section 23 so as to extend along substantially horizontal direction, respectively. In addition, as can be seen from Fig. 3D, two fuel supply ports 26 are provided in the side of the rotary kiln 30 and in the opposing side, respectively, which are disposed in parallel and in the offset relation. In other words, two fuel supply ports 26 are disposed on the identical circle mutually apart from substantially 180 degrees-phase and directed to the tangent direction of the circle, so as to blast the fuel along the inner circumference of the side wall section 23.

Then, an inlet 27 for the pyrolysis gas is provided closely to the position immediately above the one of two fuel supply ports 26 disposed in the front side of the side wall section 23, and a port 28 for introducing the cement raw materials is provided above thereof. The gas inlet 27 is utilized to introduce the pyrolysis gas transported through the gas transport line 6 from the waste treatment facility 100 as described above to the inside of the calciner 20 in a predetermined mode as will be described hereinafter. In addition, the cement raw materials falling from the cyclone 11 are supplied through the raw materials introduction port 28, as described above.

As shown in Figs. 3A to 3C, the gas inlet 27 is provided above the air inlet 25 spaced apart therefrom at a predetermined distance (2 to 6 m, for example), and in the example of the diagram, serves as introducing the pyrolysis gas downward over the horizontal plane, similarly as the air inlet 25. In addition, as can be seen from Fig. 3D, the gas inlet 27 is provided the opposing side to the side of the rotary kiln 30 (lower side in the diagram) in the side wall section 23 of the calciner 20, and is directed toward the circumference direction so as to introduce the pyrolysis gas along the inner circumference of this peripheral wall section 23.

The pyrolysis gas introduced through this gas inlet 27 flows along the inner circumference of the side wall section 23 in the calciner 20, and as indicated with black arrow in Fig. 3B, becomes swirling around the longitudinal axis 20a above and in parallel with the swirling flow of the combustion air (indicated by white arrow). In other words, the pyrolysis gas introduced through the gas inlet 27 flows so as to swirl around the mainstream of the kiln exhaust gas, which blows up in the substantially center of the calciner 20 toward the upper side, and cause no direct interference with this mainstream.

In addition, the swirling flow of the combustion air having larger flow rate is created under the swirling flow of the pyrolysis gas, so that the interference of the flow of the pyrolysis gas with the flow of the kiln exhaust gas is inhibited. More specifically, this is because, as described above in reference to Fig. 4A, the mainstream of the kiln exhaust gas is pushed by the flow of the combustion air to be deviated toward the side opposite to the air inlet 25 in the lower section of the calciner 20, and thus the pyrolysis gas is introduced to the side opposite to the side where the mainstream of the kiln exhaust gas deviates.

Further, in this embodiment, as described above in reference to Fig. 3A, when the mainstream of the the kiln exhaust gas curved in the lower duct 21 of "L"-shape ascends through the lower section of the calciner 20, the mainstream is deviated toward the side of the rotary kiln 30, and on the other hand, the pyrolysis gas is introduced to the opposite side thereto, and therefore this also reduces the interference of the flow of the pyrolysis gas with the flow of the kiln exhaust gas.

While the interference of the flow of the pyrolysis gas with the flow of the kiln exhaust gas is inhibited in this way, the swirling flow of the combustion air interferes with the flow of the kiln exhaust gas coming from underneath each other, as described above in reference to Fig. 4B, to be sufficiently heated to elevate the temperature and to be pushed up toward the upper side. Sufficient combustion of the pyrolysis gas is achieved, while the flow of the the combustion air pushed up in this way and the flow of the pyrolysis gas swirling in parallel above thereof are mixed well and move upward.

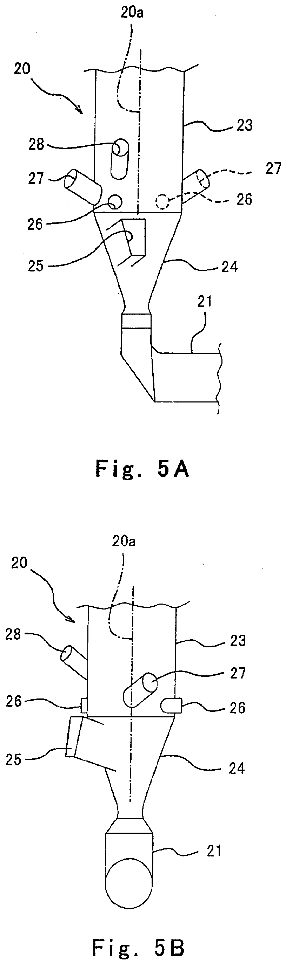

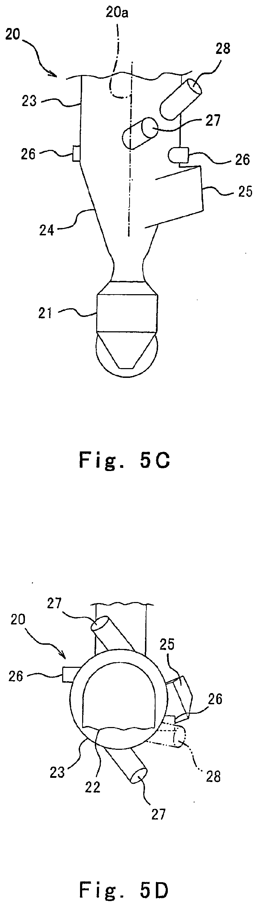

Here, results of investigation for adopting different directions for supplying the pyrolysis gas to the calciner 20 will be described. For example, as shown in Fig. 3D, the position and the direction of the gas inlet 27 in the horizontal plane is represented with angle θ1 by taking the side of the rotary kiln 30 as the reference, and the downward inclination angle of the gas inlet 27 over the horizontal plane is represented with θ2 as shown in Fig. 3C. Concerning this downward inclination angle θ2, while it may be sufficient to take at least downward slope (θ2 > 0) at the gas inlet 27 since the gas transport line 6 extending from the gasification furnace 1 to the side of the rotary kiln 30 is basically horizontal, it is preferable to take this angle to be equal to or larger than 15 degrees. However, since excessively larger θ2 reduces the swirling component (horizontal direction velocity) of the flow of the pyrolysis gas as shown in Fig. 5, θ2 should be equal to or lower than 40 degrees at a maximum, and it is preferable to take equal to or lower than 30 degrees.

In addition, in view of the mixing of the pyrolysis gas with the kiln exhaust gas or with the combustion air, it can be considered that higher flow velocity of the pyrolysis gas in the gas inlet 27 is preferable, and on the contrary, increased flow velocity leads to increased pressure loss at the gas inlet 27, and an example can be provided as about 0.3 to 0.5 kPa for the gas velocity of 30 m/s. Then, in order to avoid excessive larger pressure loss at the gas inlet 27, it is desirable to take the flow velocity of the pyrolysis gas as equal to or lower than 30 m/s. On the other hand, lower gas velocity reduces the swirling force of the gas, leading to excessive level of the entrainment with the flow of the kiln exhaust gas, and therefore it is preferable that the gas velocity is equal to or higher than 5 m/s, which is generally equivalent to the flow velocity of the kiln exhaust gas.

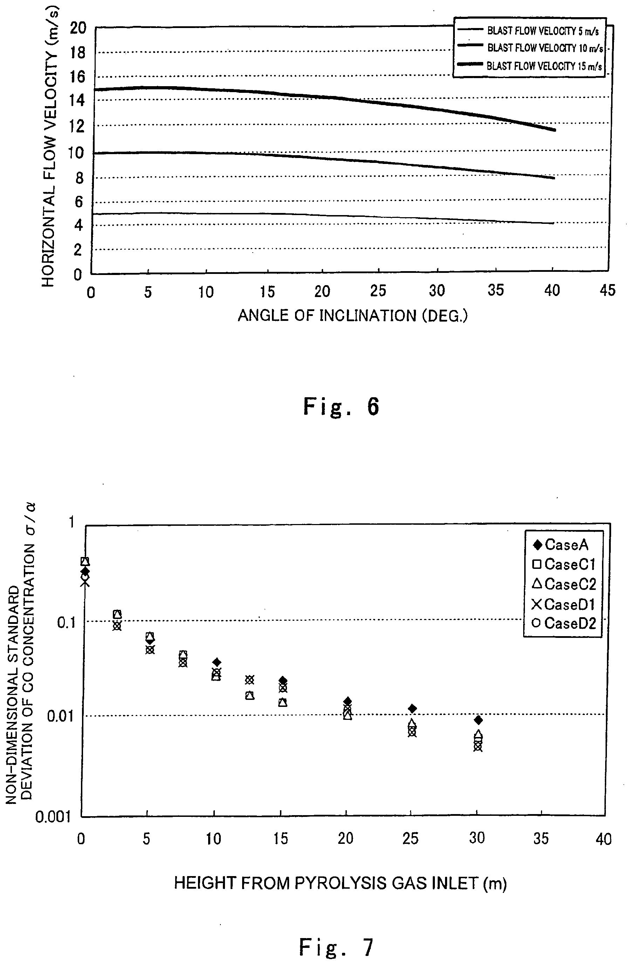

Further, results of simulations conducted in order to investigate the condition of diffusion of carbon monoxide (CO) in the pyrolysis gas in the calciner 20 are shown in Fig. 6. Abscissa of Fig. 6 represents the height from the port for introducing the pyrolysis gas, and ordinate represents the non-dimensional standard deviation of CO concentration. According to the results, it can be considered that smaller non-dimensional standard deviation of CO concentration provides better mixing of the pyrolysis gas in the calciner 20. In addition to above, no consideration on the combustion of CO is taken in the present simulation.

It can be understood from Fig. 6 that the non-dimensional standard deviation of CO concentration is larger in vicinity of the port for introducing the pyrolysis gas, indicating insufficient mixing of the pyrolysis gas. The non-dimensional standard deviation of CO concentration is reduced as proceeding toward the upside from the port for introducing the pyrolysis gas, and thus it can be understood that the mixing of the pyrolysis gas with the air is promoted.

Here, Case A, Case C1, Case C2, Case D1 and Case D2 in this graph represent five cases of employing different directions for introducing the pyrolysis gas into the calciner 20. More specifically, as shown in Fig. 3D, three of angle θ1 representing the direction of the gas inlet 27 in the horizontal plane by taking the side of the rotary kiln 30 as the reference, and two of angle θ2 representing the downward inclination angle of the gas inlet 27 over the horizontal plane as shown in Fig. 3C were examined. More specifically, the results are shown in the following table.

**[Table 1]**

| | CaseA | CaseC1 | CaseC2 | CaseD1 | CaseD2 |
|---|---|---|---|---|---|
| *θ*₁ | 70° | 95° | 95° | 135° | 135° |
| *θ*₂ | 20° | 20° | 25° | 20° | 25° |

It can be understood according to the detailed evaluation for the graph of Fig. 6 that, Case A, or θ1 of 70 degrees provides poorer mixing of the pyrolysis gas with the air as the height from the pyrolysis gas inlet 27 is increased, as compared with Cases C1, C2, D1 and D2. In addition, the comparisons of the Cases C1 and C2 with the Cases D1 and D2, namely the conditions of θ1 as 95 degrees and the conditions of θ1 as 135 degrees show that the Cases D1 and D2 eventually provides slightly better mixing of the pyrolysis gas with the air. On the other hand, concerning θ2, the inclination angle of the gas inlet 27, there is no significant difference between the cases of 20 degrees and the cases of 25 degrees.

The pyrolysis gas from the gasification furnace 1 containing entrained char and ash is transported through the gas transport line 6 to the calciner 20 having the above-described configuration, as described above. While the kiln exhaust gas of high temperature from the rotary kiln 30 is entered to this calciner 20 to form the blowing-up jet flow toward the upside, the pyrolysis gas may be introduced so as to cause no direct interfere with the mainstream of this kiln exhaust gas to ensure sufficient combustion in the calciner 20 without blowing through of the pyrolysis gas and char.

More specifically, the pyrolysis gas is introduced from the gas inlet 27 provided in the lower section of the peripheral wall section 23 in the calciner 20 so as to swirl around the mainstream of the kiln exhaust gas, and below this gas, the swirling flow of the combustion air having larger flow rate is formed so as to preferentially cause the interference with the flow of the kiln exhaust gas from underneath, such that the blowing through of the pyrolysis gas due to the flow of the kiln exhaust gas can be more firmly inhibited.

Then, the pyrolysis gas swirling in parallel with the combustion air having elevated temperature by the kiln exhaust gas is mixed well to achieve improved ignitionability and combustibility, and in addition, the fuel such as pulverized coal is supplied from the fuel supply port 26 provided in vicinity of the gas inlet 27 to cause ignition and combustion, which leads to serving as a fire source, and thus it is expected to further enhance the ignitionability of the pyrolysis gas.

### - Modified Embodiment of Calciner -

While the pyrolysis gas is introduced in the calciner 20 of the cement production facility 200 so as to create the swirling flow around the mainstream of the kiln exhaust gas and the combustion air is introduced so as to swirl below and in parallel with the pyrolysis gas in first embodiment as described above, the present invention is not limited thereto.

More specifically, the combustion air may be introduced in the calciner 20 above the swirling flow of the pyrolysis gas, and the both of the combustion air and the pyrolysis gas may be introduced without forming swirling flow. In conclusion, it is sufficient to introduce the pyrolysis gas so as to prevent direct interference with the mainstream of the kiln exhaust in the calciner 20, and thus, for example, when the kiln exhaust gas is entered as a swirling flow in the calciner 20, the pyrolysis gas may be introduced along the swirling center of the flow.

In addition, while the pyrolysis gas and the combustion air are introduced in the side opposite to the side of the rotary kiln 30 in the peripheral wall section 23 of the calciner 20 in first embodiment, the present invention is not limited thereto, and as an example, the gases may be introduced in the side of the rotary kiln 30, or as another example, the gas inlet 27 may be connected on the way of the air inlet 25 as shown in Fig. 2C, and the pyrolysis gas may be introduced in the calciner 20 while premixing with the combustion air.

In addition, the number of the inlet 27 for the pyrolysis gas is not limited to one, and if two or more of gasification furnaces 1 are installed in the waste treatment facility 100, it may be configured that each of the flows of the pyrolysis gas transported through the different gas transport lines 6 from the associated gasification furnaces 1 is individually introduced in the calciner 20.

As an example, Figs. 7A to 7D show modified embodiment for being provided with two gas inlets 27 in the calciner 20. The present modified embodiment is substantially equivalent to the calciner 20 in the aforementioned first embodiment, except that only the number and the location of the gas inlet 27 are different therefrom. As shown in Figs. 7A to 7C, in the calciner 20 of modified embodiment, two gas inlets 27 are provided to be downwardly inclined over the horizontal plane similarly as in first embodiment, in the side of the rotary kiln 30 and in the opposite side, respectively.

In addition, as shown in Fig. 7D in the plan view, two gas inlets 27 are respectively directed toward the circumferential direction so as to introduce the pyrolysis gas along the inner circumference of side wall section 23, and are disposed in parallel on the identical circle mutually apart from substantially 180 degrees-phase. More specifically, two gas inlets 27 serves for supplying the pyrolysis gas so as to form the swirling flows having the equivalent direction on the identical circle. Different flows of the pyrolysis gas are introduced at further remote sites as possible while enhancing the swirling components of the flows in this way to provide further enhanced combustibility of the pyrolysis gas.

### - Bypass Line -

In addition to the above-described configuration, a bypass line 60 is further provided in the cement production facility 200 of the present embodiment as shown in Fig. 1, for the purpose of preventing unwanted concentration of chlorine component or alkali component in the gas during the circulation of the gas through the suspension preheater 10 and the calciner 20. More specifically, when a mixed combustion with the pyrolysis gas from the waste is conducted in the cement production facility as in the present embodiment, concentrations of the chlorine component and the alkali component in the cement clinker tend to be increased by the influence of the chlorine component and the alkali component originally contained in the wastes, leading to possibly causing troubles related to the adhesion.

In order to solve the problem, the bypass line 60 connected to the lower section (or lower duct 21) of the calciner 20 is utilized in the illustrated cement production facility 200 to extract a portion of the gas, and then the extracted gas is cooled by a cooler 61, and then is transported to a cyclone 62 (classifier) to classify the dusts off. Cold blast is supplied to the cooler 61 by means of a fan 63, and the extracted gas is quenched to a temperature equal to or lower than the melting point of the chlorine compound or the like to separate the chlorine component or the alkali component in the extracted gas as solid matters (dusts).

Then, the dusts in the extracted gas is classified into coarse powder and fine powder in the cyclone 62, in which the coarse powder containing substantially none of the chlorine component and the alkali component falls from the bottom end of the cyclone 62, and is returned to the calciner 20 through a return line 60a, which is shown in the diagram while omitting a section thereof. On the other hand, the fine powder containing higher concentrations of the chlorine component and the alkali component is entrained with the extracted gas drawn out by the cyclone 62 to be discharged in a downstream-side line 60b of the bypass line 60, and then is recovered by a dust collector 54.

While the system of Fig. 1 is shown as connecting the downstream-side line 60b of the bypass line 60 on the way of the exhaust gas line 50 to share the induced draft fan 52, the gas cooler 53 and the dust collector 54, which are used to deliver the kiln exhaust gas to the chimney 51, the real system employs dedicated induced draft fan, gas cooler and dust collector in the bypass line 60, which gives independence from the exhaust gas line 50.

### - Flow Rate Ratio of Pyrolysis gas -

As described above, the waste treatment facility 100 of the present embodiment is configured to draw the pyrolysis gas from the gasification furnace 1 by utilizing the negative pressure for drawing the kiln exhaust gas in the cement production facility 200, and the drawn pyrolysis gas is transported to the calciner 20 through the gas transport line 6. More specifically, the kiln exhaust gas is drawn by the induced draft fan 52 to create a negative pressure state in the calciner 20, and if the flow rate of the exhaust gas is sufficiently larger, sufficiently larger negative pressure could be maintained even though relatively smaller amount of the pyrolysis gas is entered.

Since the quantity of the exhaust gas from the cement production facility 200 is overwhelmingly larger, namely 10 or more times of the quantity of the pyrolysis gas generated in gasification furnace 1 in the present embodiment, the negative pressure state in the calciner 20 is stably maintained. Thus, it is configured to utilize this stable negative pressure to transport the pyrolysis gas from the gasification furnace 1, and no air blower is provided at the gas transport line 6. In addition, the interior of the gasification furnace 1 is also maintained at the negative pressure, and no leakage of the pyrolysis gas to the outside is caused.

However, in the case that the flow rate of the pyrolysis gas is increased, it may temporarily become impossible to maintain the negative pressure state in the gasification furnace 1 when the state of the combustion in the calciner 20 or the quantity of the generated pyrolysis gas in the gasification furnace 1 is fluctuated, possibly causing the leakage of the pyrolysis gas to the outside. The inventors of the present invention have confirmed the change of the pressure in the gasification furnace 1 by stepwise increasing ratio of the flow rate of the pyrolysis gas over the flow rate of the kiln exhaust gas by means of the simulation.

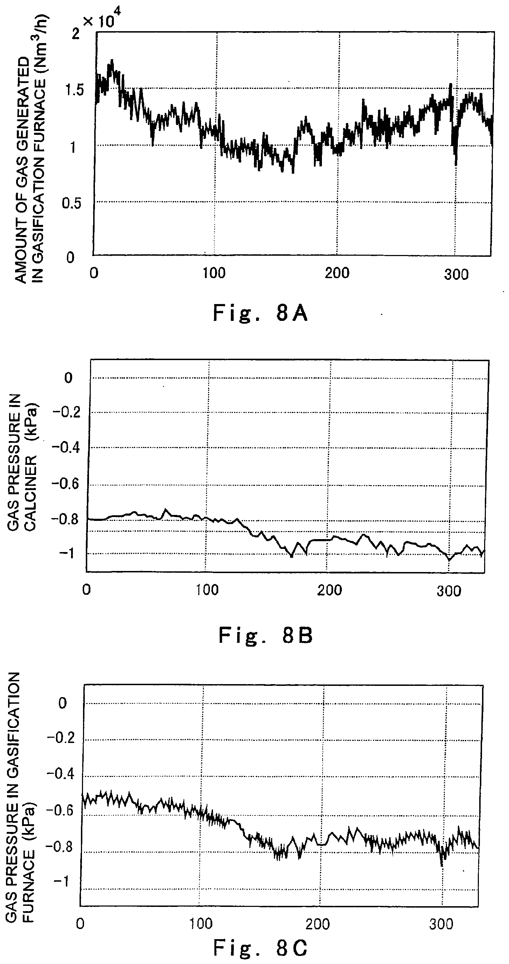

First of all, Figs. 8A to 8C show the simulation results for the flow rate ratio of about 1/10 as in the present embodiment. Fig. 8A shows the state of the fluctuation in the quantity of the generated pyrolysis gas in the gasification furnace 1, in consideration of the fluctuation of the amount of the air transferred to the fluidized bed in the gasification furnace 1, which is given to the simulation as a disturbance. This fluctuation of the gas quantity is obtained by the simulation. On the other hand, it is the graph of Fig. 8B, showing the expanded fluctuation range by three times, obtained by conducting the experiments employing real cement calciner to measure the state of fluctuation in the internal gas pressure.

The simulations are carried out on the basis of the fluctuation of the quantity of the generated gas in the above-described gasification furnace and the fluctuation of the gas pressure in the calciner to obtain a graph showing the fluctuation of gas pressure in the gasification furnace 1 as shown in Fig. 8C. This gas pressure falls at the level of equal to or lower than -0.5 kPa at a maximum, and thus it is understood that, when the flow rate ratio is in the relaxed range, namely 1/10, the inside of the gasification furnace 1 is maintained in the preferable negative pressure state even if the quantity of the generated pyrolysis gas fluctuates.

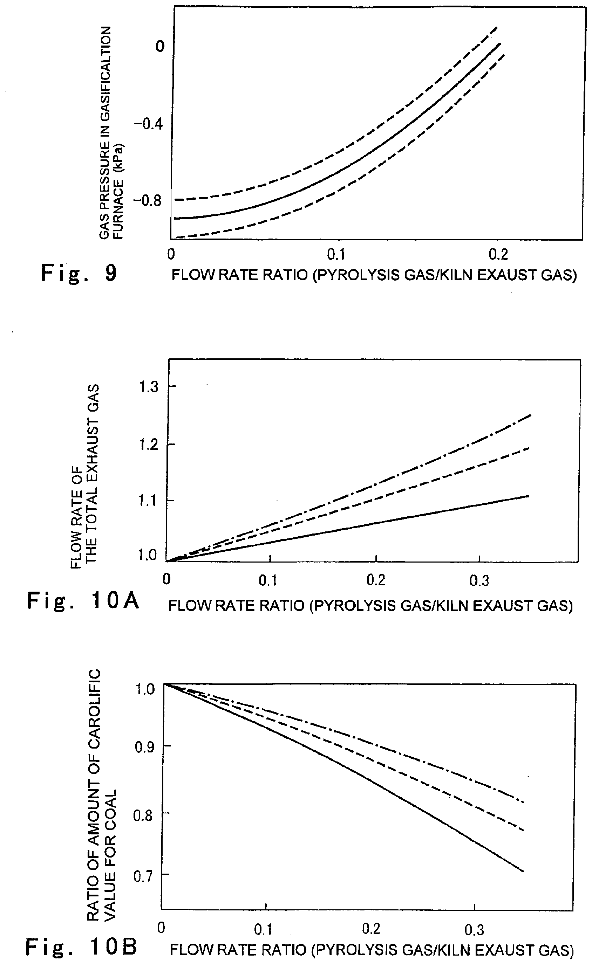

In next, Fig. 9 shows the relation of the pressure in the gasification furnace 1 over the flow rate ratio of the pyrolysis gas.
The solid line in the graph represents the average value of the pressure in the gasification furnace 1 in a certain flow rate ratio, and the dotted lines in the graph represent the value taking the above-described fluctuation into consideration. As shown in the left end of the graph (flow rate ratio = 0), the calciner pressure in the isolated operation of the kiln is -0.9 kPa. As the flow rate ratio is increased, or in other words as the quantity of the generated pyrolysis gas is increased, the pressure in the gasification furnace 1 is also increased, approaching to the atmospheric pressure.

It is understood according to the graph that, if flow rate ratio is around 0.1 = 1/10 as in this embodiment, the pressure in the gasification furnace 1 is - 0.5 to -0.7 kPa, and when the flow rate ratio of the pyrolysis gas becomes around 0.2, the average value of the internal pressure in the gasification furnace is substantially equivalent to the atmospheric pressure (0) as shown by the solid line in the graph. This indicates that the flow rate of the pyrolysis gas must be equal to or lower than 1/5 of the flow rate of the kiln exhaust gas, in order to transport the pyrolysis gas coming from the gasification furnace 1 to the calciner 20 for cement with such a negative pressure.

Meanwhile, the above-described simulation is related to the case where the waste treatment facility 100 is installed substantially without modifying the existing cement plant. More specifically, in general, margin of around 10 % is provided for the capacitance of the induced draft fan 52 for discharging the kiln exhaust gas in the cement plant, and therefore this means that it is the time that the negative pressure cannot be maintained in the inside of the gasification furnace 1 due to the increased flow rate of the pyrolysis gas as described above, when the flow rate of the exhaust gas from the calciner 20 is increased by around 10 % due to the supply of the pyrolysis gas.

Since the heat generated from the general waste is 1,000 to 3,000 kcal/kg, which is lower than the heat generated from the coal, the generated heat per unit amount of the combustion gas is also smaller. Thus, based on the assumption that the necessary amount of the generated heat is ensured by the combustion in the calciner 20, the amount of the exhaust gas from the calciner 20, or namely the total flow rate of the exhaust gases composed of the combustion gas from the pyrolysis gas and/or the pulverized coal and the kiln exhaust gas is increased, when the pyrolysis gas derived from the waste of lower heat generation is added.

For example, the result of the trial calculation assuming that the generated heat of the coal is 5,500 kcal/kg indicates that the change of the flow rate of the total exhaust gas by adding the pyrolysis gas is shown in the graph of Fig. 10A. Abscissa of this graph represents the ratio of the flow rate of the pyrolysis gas over the flow rate of the kiln exhaust gas, and ordinate represents the ratio of the flow rate of the total exhaust gas, or in other words, the rate of the increase in the flow rate of the total exhaust gas from the calciner 20, taking the case of adding no pyrolysis gas as a reference. It can be seen from the graph that larger ratio of the flow rate of the pyrolysis gas provides larger increase in the flow rate of the total exhaust gas from the calciner 20.

In addition, as shown in the order of the solid line, the dotted line, and the altemate-long-and-short dash line in the graph, lower amount of the heat generated from the waste provides increased total flow rate of the exhaust gas, even if the flow rate ratio is the same. The amounts of heat generated from the waste shown in respective lines in the graph are: 2,500 kcal/kg; 1,400 kcal/kg; and 1,000 kcal/kg. As shown by the dotted line in the graph, the amount of the heat generated from the waste of 1,400 kcal/kg provides the ratio of the flow rate of the total exhaust gas of 1.1, when the ratio of the flow rate of the pyrolysis gas is 0.2. This corresponds to the fact that the inside of the gasification furnace 1 is in the positive pressure for the ratio of the flow rate of 0.2, when the margin of the ventilation system for the kiln exhaust gas in cement plant is around 10%, as described above in reference to Fig. 9.

On the contrary, if the ventilation system for the kiln exhaust gas in the existing cement plant is reinforced, or if relatively larger margin of ventilation system is defined in the case of constructing a new cement plant, the negative pressure can be maintained in the inside of the gasification furnace 1 even though the ratio of the flow rate is further increased. If the margin is around 20 to 25%, the ratio of the flow rate can be increased to around 0.3, according to the altemate-long-and-short dash line in the graph of Fig. 10A, even if the amount of the heat generated from the waste is considerably lower, namely 1,000 kcal/kg.

Next, the graph of Fig. 10B shows the correlation of the rate of the heat generated by the combustion of the pulverized coal among the generation of the heat by the combustion in the calciner 20 (ratio of amount of heat generation for coal) provided in ordinate, over the ratio of the flow rate provided in abscissa. Since higher ratio of the flow rate provides higher proportion of the pyrolysis gas in the fuels, the ratio of the amount of heat generation for coal is decreased, and the level of the decrease is larger as the amount of the heat generation of the pyrolysis gas is larger, or in other words, in the order of the altemate-long-and-short dash line, the dotted line, and the solid line.

In addition, it can be understood that higher ratio of the flow rate provides larger change of the ratio of the amount of heat generation for coal due to the difference of the amount of heat generation of the pyrolysis gas, and thus the fluctuation in the combustion temperature resulted from the variation of the amount of the heat generation of the pyrolysis gas is increased. More specifically, higher ratio of the flow rate of the pyrolysis gas provides stronger reflection of the fluctuation in the amount of the heat generation resulted from the difference in type of the waste over the combustion temperature in the calciner 20, causing the fluctuation in the temperature of the calciner 20.

When three lines in the graph of Fig. 10B are considered in this aspect, it is found that the ratio of the flow rate of 0.3 provides the average value of the ratio of the amount of the heat generation for the coal of about 0.8, and in other words, about 80 % of the heat generation by the combustion of the combination of the pyrolysis gas and the pulverized coal is from the combustion of the pulverized coal in this case. More specifically, it can be found that the combustion of the pulverized coal is dominant for the temperature of the calciner 20, if the ratio of the flow rate of the pyrolysis gas is equal to or lower than 0.3. This allows stable operation for the cement production facility 200, even if the variation in the amount of the heat generation of the pyrolysis gas is increased.

In the present embodiment, the input of the waste to the gasification furnace 1 is adjusted by controlling the working speed of the transportation device 4 and the flow rate of the fluidizing air is adjusted by controlling the rotating speed of the blower 5 and controlling the damper opening so as to achieve the ratio of the flow rate to be around 1/10, so that the generating quantity of the pyrolysis gas is controlled. As an example, the negative pressure in the gasification furnace 1 and the flow rate of the pyrolysis gas in the gas transport line 6, or the negative pressure in the calciner 20 and the flow rate of the exhaust gas, may be measured, and on the basis of this measured values, the control may be achieved.

As have been described above, in the waste treatment facility 100 according to first embodiment, the pyrolysis gas generated from the waste in the gasification furnace 1 containing the entrained char and the ash is transported to the cement production facility 200 through the gas transport line 6, and is introduced to the calciner 20. In such a configuration, the flow rate ratio of the flow rate of the pyrolysis gas over the flow rate of the kiln exhaust gas is limited to a level below the predetermined value, so that the fluctuation in the temperature of the calciner 20 can be inhibited to provide ensured stability for the operation of the cement production facility 200.

In addition, since the pyrolysis gas can be transported by the negative pressure in the calciner 20 to maintain the state of the negative pressure in the interior of the gas transport line 6 and the gasification furnace 1, there is no need to provide an air blower in the gas transport line 6, and thus, there is no concern for causing failure due to the adhesion and the deposition of the char and the ash contained in the pyrolysis gas on the impeller of the blower. The leakage of the pyrolysis gas from the gasification furnace 1 can also be prevented.

Further, even if the operation of the gasification furnace 1 is stopped by some trouble to cease the supply of the pyrolysis gas and the char to the calciner 20, the supply of the auxiliary fuel such as pulverized coal may be increased to compensate this shortage to avoid an obstruction for the operation of the calciner 20.

In addition, the fluidized bed-type gasification furnace 1 is employed to finely crush the waste by the movement of the fluidizing sand, so that it is easy to achieve smaller particle diameter of the char and the ash in the pyrolysis gas, and thus it is advantageous for inhibiting the adhesion and the deposition of the char and the ash in the gas transport line 6. Further, the temperature in the gasification furnace 1 can be maintained at sufficiently higher temperature by supplying the pulverized coal as the auxiliary fuel, even if the waste of lower quality are processed, and thus this is also advantageous for inhibiting the adhesion and the deposition of the char and the ash in the gas transport line 6.

In addition, a plurality ejector devices 6a are disposed on the way of the gas transport line 6 to intermittently blow the compressed air, and these can achieve the removal of the char and the ash deposited in the inside of the gas transport line 6. Further, the gas inlet 27 for supplying the pyrolysis gas in the calciner 20 is configured to be inclined downward, so that the adhesion and the deposition of the char and the ash can be inhibited.

### (Second Embodiment)

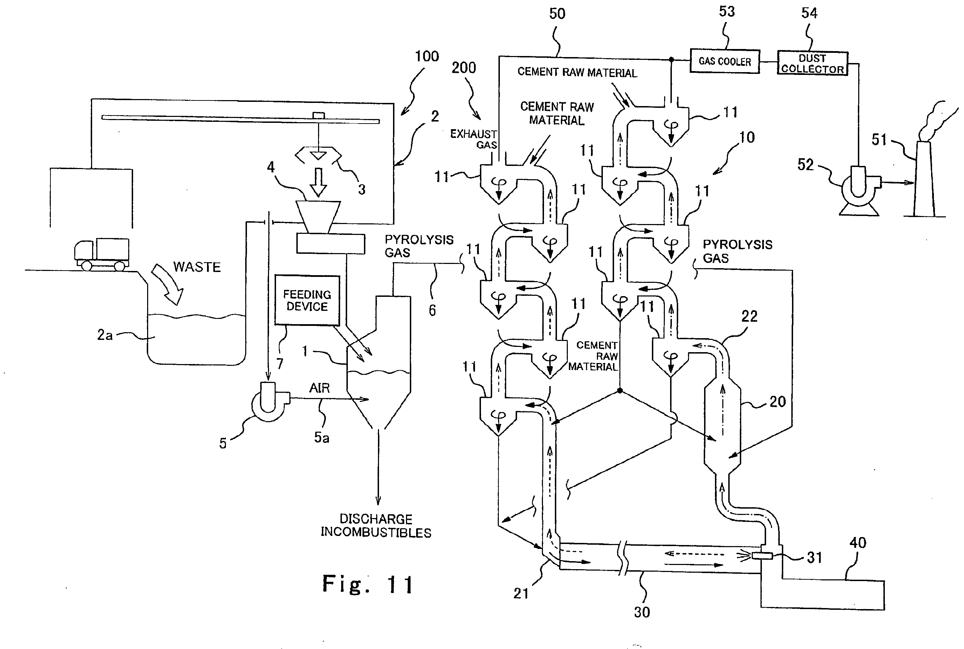

Next, a waste treatment facility and a cement production facility according to second embodiment of the present invention will be described in reference to Fig. 11. Fig. 11 corresponds to Fig. 1 of the above-described first embodiment 1. While the configurations of the suspension preheater 10 and the calciner 20 in the cement production facility 200 in the present embodiment are different from those in first embodiment, the calciner 20 is the same as one employed in first embodiment except that it has no air inlet 25, and therefore the identical reference numeral 20 is assigned. The same reference numeral is also referred to the same member having same configuration except the above, and the description thereof is not given.

In addition, since a portion of the gas transport line 6 is hidden behind the suspension preheater 10 in Fig. 11, the illustration of the ejector device 6a is omitted. Similarly, while the illustration of the bypass line 60 is also omitted for the illustrative convenience, the gas transport line 6 is provided with a plurality of ejector devices 6a, and in addition, also includes the bypass line 60, the cooler 61, the cyclone 62 and the like, similarly as in first embodiment.

Further, in the cement production facility 200 of this second embodiment, the suspension preheater 10 is divided into two routes, and the cyclones 11 of, as an example five levels, are included in each of the routes. The left side route shown in the diagram is configured that the kiln exhaust gas is blasted from the lower level, and this is similar as in first embodiment, except that the calciner 20 is not provided. On the other hand, the right side route shown in the diagram is configured to have the calciner 20, where not the kiln exhaust gas, but the cooler exhaust gas of high temperature, is entered from the air quenching cooler 40.

The cooler exhaust gas is entered into the bottom end of the calciner 20 similarly as the kiln exhaust gas in first embodiment to form the blowing-up jet flow (indicated in the diagram with the altemate-long-and-short dash line). This cooler exhaust gas is mixed with the pyrolysis gas introduced in the calciner 20 to blow up the cement raw materials while burning thereof, reaching to the cyclone 11 of the lowermost level from the upper duct 22. Then, this rises through the levels of the cyclones 11 step by step to flow out from the cyclone 11 of the uppermost level to the exhaust gas line 50.

The lower section of the calciner 20 is configured to be supplied with the cement raw materials from the cyclone 11 similarly as in first embodiment, though an illustration of details is omitted, and the gas inlet 27 is provided for introducing the pyrolysis gas from the gasification furnace 1, but no air inlet 25 for combusting thereof is provided. This is because the cooler exhaust gas blowing up through the calciner 20 contains much amount of oxygen as described above, unlikely as the case of the kiln exhaust gas.

The structure of the calciner 20 is the same as first embodiment except this feature, the flow rate of the pyrolysis gas is moderated, at around 1/10 of the flow rate of the cooler exhaust gas, and is introduced as a swirling flow into the calciner 20 through the gas inlet 27. More specifically, the pyrolysis gas is also introduced to the calciner 20 in the present embodiment in a mode of causing no direct interference with the mainstream of the cooler exhaust gas. In addition, the pyrolysis gas is introduced to the inside of the calciner 20 through the gas inlet 27 provided to be downwardly inclined over the horizontal plane.

Then, the pyrolysis gas is entrained with the mainstream of the cooler exhaust gas to swirl in a helical spiral fashion around the blowing-up cooler exhaust gas without blowing through the calciner 20, while these gases are gradually mixed to achieve sufficient combustion. This combustion achieves the elevated temperature of the cooler exhaust gas rising to 900 degrees C or higher, which accelerate the calcining (decarboxylation) of the blown-up cement raw materials.

Meanwhile, the pyrolysis gas derived from the waste may possibly contain dioxin, and in order to degrade dioxin, it is necessary to maintain the atmosphere at a temperature of 850 degrees C or higher for about 2 seconds or longer, and in the present embodiment, the temperature of the pyrolysis gas burned in the calciner 20 is maintained at 900 degrees C or higher for equal to or longer than 4 seconds, so that dioxin is sufficiently degraded.

And, the flow rate of the pyrolysis gas is also moderated at around 1/10 of the flow rate of the cooler exhaust gas in this second embodiment, such that, even if the amount of the heat generation fluctuates according to the types of the wastes, the fluctuation in the temperature of the calciner 20 is not considerably increased. In addition, the pyrolysis gas is transported by utilizing the negative pressure created in the calciner 20.

Therefore, even if it is configured to enter the cooler exhaust gas into the calciner 20 as in this second embodiment, stable operation of the cement production facility 200 can be achieved and the pyrolysis gas can be transported only by the negative pressure of the calciner 20, by limiting the relative flow rate of the pyrolysis gas from the gasification furnace 1 in relation to the flow rate of the exhaust gas from the calciner 20 to a level below a predetermined flow rate ratio. Thus, there is no need to provide an air blower in the gas transport line 6, and thus, there is no concern for causing failure thereof.

### (Other Embodiments)

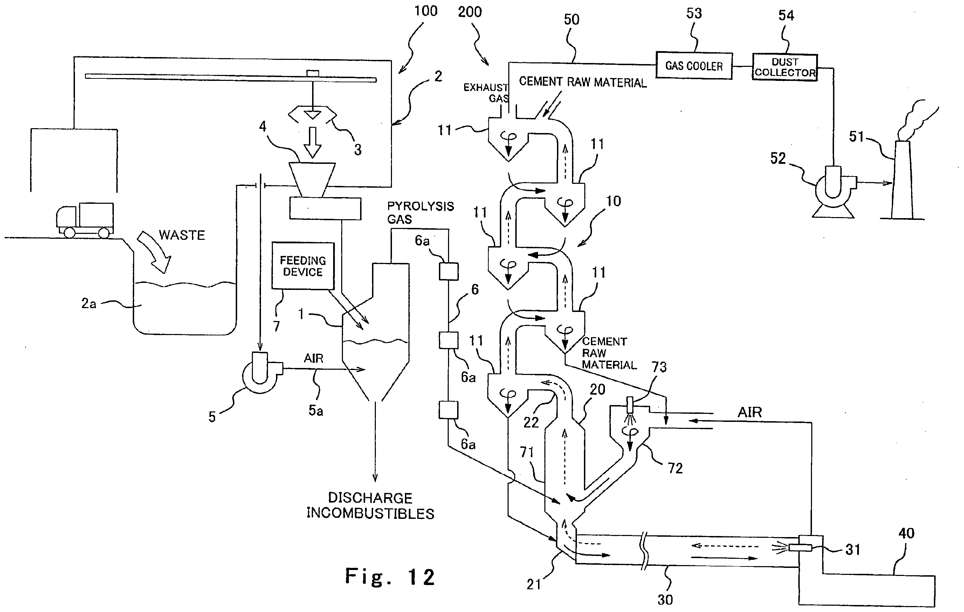

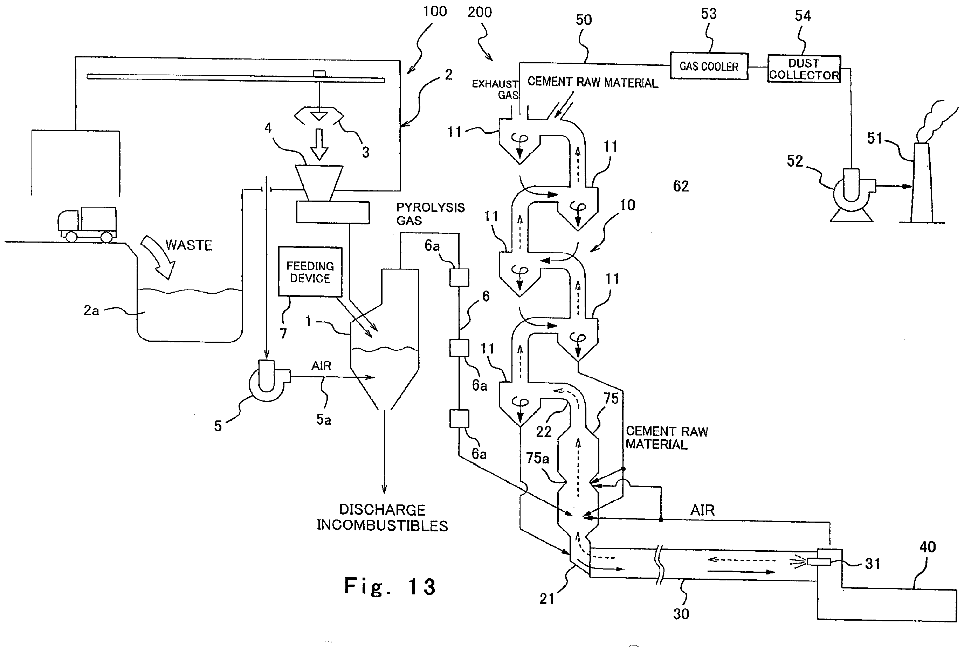

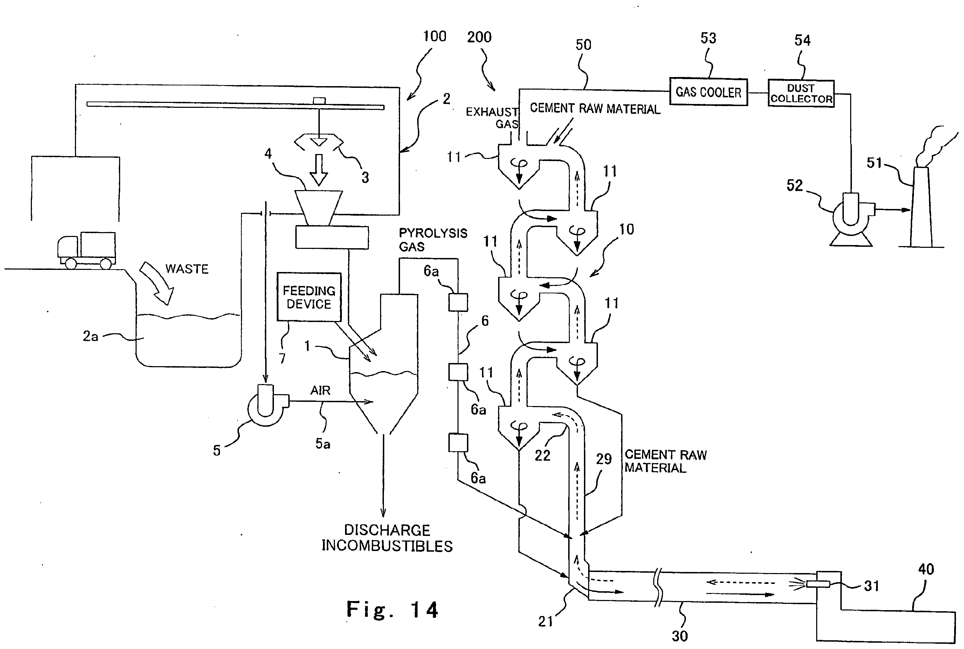

Fig. 12 and Fig. 13 show different embodiments, respectively having configurations of different calciners in the cement production facility 200. In addition, Fig. 14 shows an embodiment having no calciner. Since all of these embodiments have configurations that are similar to the above described first embodiment except the configuration related to the calciner, the identical numeral is assigned to the identical member and the description thereof is omitted.

First of all, the calciner 70 of the embodiment shown in Fig. 12 is generally similar as employed in first embodiment, but is provided with a mixing chamber 71 provided in the introduction section of the rotary kiln 30 and a swirling calcining chamber 72 in communication with the lower section thereof, and a combustion device 73 is disposed in this swirling calcining chamber 72 to blast a combustion gas of high temperature created by the combustion of the coal, the natural gas, the heavy oil and the like. As shown in the diagram, a cooler exhaust gas (air) of high temperature is introduced as a swirling flow from the air quenching cooler 40 to the swirling calcining chamber 72, and preheated cement raw materials are supplied from the cyclone 11 before the lowermost level.

The cement raw materials are subjected to the combustion gas from the combustion device 73 to move to the mixing chamber 71 while being calcined, where the raw materials are blown up toward the upper side by the jet flow of the kiln exhaust gas coming from underneath. More specifically, the flow of the combustion gas containing the cement raw materials is interfluent with the flow of the kiln exhaust gas in the mixing chamber 71, and both are rising upward while being mixed well. The cement raw materials are sufficiently calcined while these are entrained with the upward flow to be blown up, and are transported to the cyclone 11 of the lowermost level from the outlet at the top of the mixing chamber 71 through a duct. In addition to above, the pyrolysis gas from the gasification furnace 1 may be introduced between the entrance of the rotary kiln 30 and the exit of the mixing chamber 71, or between the swirling calciner 72 and the mixing chamber 71.

On the other hand, a calciner 75 of an embodiment shown in Fig. 13 has a structure generally similar to that employed in first embodiment and is provided in the introduction section of the rotary kiln 30 so as to extend toward the longitudinal direction, while an annular bundled unit 75a is created in a section at the substantially center of the longitudinal extension, and this bundled unit 75a is configured to supply air to the inside of the calciner 75.

More specifically, it is configured that the cooler exhaust gas of high temperature from the air quenching cooler 40 is introduced as a swirling flow to the lower section of the calciner 75 similarly as in the above described configuration of first embodiment, meanwhile a portion of the cooler exhaust gas is guided to the aforementioned bundled unit 75a through the branched passageway from a supply passageway for this cooler exhaust gas to be eventually introduced to the interior of the calciner 75 through an inlet created here. The portion of the cooler exhaust gas introduced in this way is supplied as air for re-combustion into the jet flow of the kiln exhaust gas that blows up through the calciner 75. In the present embodiment, the pyrolysis gas from the gasification furnace 1 may also be introduced between the entrance of the rotary kiln 30 and the exit of the calciner 75.

Next, no calciner is provided in an embodiment shown in Fig. 14, and the lower duct 21 connected to the inlet of the rotary kiln 30 is linked to the upper duct 22 connected to the cyclone 11 of the lowermost level in the suspension preheater 10 via a rising tube 29. The cement raw materials and the pyrolysis gas from the gasification furnace 1 are supplied respectively through this rising tube 29, and then are blown up by the jet flow of the kiln exhaust gas. The pyrolysis gas reacts with oxygen contained in the kiln exhaust gas to be burned within the rising tube 29 and the suspension preheater 10.

The descriptions of the respective embodiments described above are for illustrations only, and it is not intended to limit the scope of the present invention, the applicable object thereof or the application thereof. For example, while the above-described respective embodiments are configured to transport the pyrolysis gas only by the negative pressure of the cement calciner 20, the present invention is not limited thereto. It is not intended that "utilizing the negative pressure of the calciner transport the pyrolysis gas" excludes "supplementarily adding blower", but means that the pyrolysis gas can be transported to the calciner 20 by the negative pressure to maintain the negative pressure state in the inside of the gasification furnace 1 even if blower is not provided.

In addition, if it is sufficient to process only the general waste having the amount of the heat generation of, for example, equal to or higher than 1,000 kcal/kg, suitable temperature level of the fluidized bed in the gasification furnace 1 can be maintained by burning a portion thereof, and thus it is not necessary to supply any auxiliary fuel like the aforementioned respective embodiments, and therefore the feeding device 7 for the pulverized coal of that purpose may be omitted. Similarly, if it is sufficient to process only the waste containing relatively smaller amounts of chlorine component and alkali component, the bypass line 60 may be omitted from the aforementioned respective embodiments.

In addition, while the ejector device 6a is disposed in the gas transport line 6 from the gasification furnace 1 to the calciner 20 to blow the deposited char and ash off in the aforementioned respective embodiments, it may alternatively omit this.

Further, concerning the structures of the gasification furnace 1 in the waste treatment facility 100 and the kiln (burning furnace) of the cement production facility 200 are not limited to that employed in the above-described respective embodiments. The gasification furnace 1 is not limited to the fluidized bed type furnace, but may be a kiln type furnace, which is also the low temperature-gasification configuration, or may alternatively be a high temperature-gasification configuration. In addition, the burning furnace is not also limited to the rotary kiln 30, and, for example, it may be a fluidized bed kiln.

In addition, while the non-industrial waste from home and the industrial waste containing waste plastics are assumed as the waste to be supplied to the gasification furnace 1 in the above-described respective embodiments, it is not limited thereto, and wood-related biomass such as woods thinned from forests, wood chips and the like or other type of biomass such as livestock excreta, sewage sludge and the like may alternatively be supplied to the gasification furnace 1.

### Industrial Applicability

According to the present invention, the pyrolysis gas from the waste generated in the gasification furnace containing the entrained char and ash can be transported to the calciner for cement to achieve the combustion thereof, such that the existing cement production facility can be profitably-utilized to achieve the sanitizing treatment of the waste at lower costs, and therefore the profit on the industry is higher.

### Reference Citation Lists

100 waste treatment facility
1 gasification furnace
6 gas transport line (gas transport path)
6a ejector device
7 feeding device for pulverized coal
200 cement production facility
10 suspension preheater (preheater)
20 calciner
21 lower duct
23 side wall section (cylindrical peripheral wall)
24 tapered section
25 air supply port
26 fuel supply port,
27 gas inlet (gas supply means)
30 rotary kiln (burning furnace)
40 air quenching cooler (clinker cooler)

## Claims

1. A system comprising a waste treatment facility (100) and a cement production facility (200) installed in a vicinity of each other, comprising:
a gasification furnace (1) configured to gasify a waste to generate a pyrolysis gas;
a gas transport path (6) configured to transport the pyrolysis gas generated in said gasification furnace (1) to a preheater (10) or a calciner (20) for cement in said cement production facility (200), the pyrolysis gas containing entrained char and ash; and
a transportation device (4) configured to supply the waste to said gasification furnace (1), wherein
an input of the wastes to said gasification furnace (1) by said transportation device (4) is configured to be adjusted to provide a ratio of less-than-or-equal-to 0.3 of a flow rate of the pyrolysis gas from said gasification furnace (1) to a flow rate of an exhaust gas discharged from said preheater (10) or calciner (20),
**characterized in that**
said gasification furnace (1) has a feeding device (7) for supplying an auxiliary fuel to the inside of the furnace, and
said feeding device (7) is configured to be supplied with powdered auxiliary fuel having mean particle diameter of 0.1 to 3 mm.

2. A system comprising a waste treatment facility (100) and a cement production facility (200) installed in a vicinity of each other, comprising:
a gasification furnace (1) configured to gasify a waste to generate a pyrolysis gas;
a gas transport path (6) configured to transport the pyrolysis gas generated in said gasification furnace (1) to a preheater (10) or a calciner (20) for cement in said cement production facility (200), the pyrolysis gas containing entrained char and ash; and
a transportation device (4) configured to supply the waste to said gasification furnace (1), wherein
an input of the wastes to said gasification furnace (1) by said transportation device (4) is configured to be adjusted to provide a ratio of less-than-or-equal-to 0.3 of a flow rate of the pyrolysis gas from said gasification furnace (1) to a flow rate of an exhaust gas discharged from said preheater (10) or calciner (20),
**characterized in that**
said calciner (20) is configured to be supplied with high temperature exhaust gas from any of a burning furnace (30) of said cement production facility (200) or a clinker cooler (40),
wherein said gas transport path (6) is configured to transport the pyrolysis gas coming from said gasification furnace (1) to said calciner (20), and
wherein said waste treatment facility (100) is comprising a gas supply means (27) configured to introduce the pyrolysis gas coming through said gas transport path (6) to the inside of said calciner (20) such that the flow thereof causes no direct interference with a mainstream of said high temperature exhaust gas entered to the inside of said calciner (20).

3. The system as set forth in claim 2,
wherein said calciner (20) is configured so that said pyrolysis gas introduced to said calciner (20) is burned at a temperature equal to or higher than 850 degrees for at least two seconds during detention of said pyrolysis gas in the calciner (20).

4. The system as set forth in claim 2,
wherein said calciner (20) has a cylindrical peripheral wall, and a mainstream of the exhaust gas flow from said burning furnace (30) or the clinker cooler (40) is formed to flow from one end of the cylindrical peripheral wall toward the other end along a direction of a cylinder axis thereof, and wherein said gas supply means (27) is comprising a gas inlet, which is provided in said cylindrical peripheral wall to be oriented to the circumference direction to supply the pyrolysis gas such that the supplied gas swirls around said cylinder axis.

5. The system as set forth in claim 4,
wherein the peripheral wall of said calciner (20) extends to the longitudinal direction, and the exhaust gas from said burning furnace (30) or the clinker cooler (40) entered to the bottom end thereof forms a blowing-up jet flow, and
said gas inlet (27) is configured to introduce the pyrolysis gas downward over the horizontal plane with an inclination angle of larger than a 0 degree and equal to or lower than 40 degrees.

6. The system as set forth in claim 5,
wherein said gas inlet (27) is configured so that the pyrolysis gas is introduced from said gas inlet (27) at a flow velocity of 5 to 30 m/s.

7. The system as set forth in claim 4,
wherein the exhaust gas from said burning furnace (30) is entered to the bottom end of the peripheral wall of said calciner (20), and
a lower section of the peripheral wall is provided with an air inlet (25) for introducing combustion air to form a flow swirling toward a direction same as the flow direction of the pyrolysis gas, and wherein said gas inlet (27) is provided above and spaced apart from said air inlet (25) at a predetermined distance.

8. The system as set forth in claim 7,
wherein said air inlet (25) is configured to introduce combustion air downward at a predetermined inclination angle over the horizontal plane.

9. The system as set forth in claim 7,
wherein the bottom end of said calciner (20) is connected to a duct (21), which extends downward and then is bent to form an "L"-shape to reach to the entrance of the burning furnace (30), and
wherein said gas inlet (27) is provided in the peripheral wall of said calciner (20) at an opposite side to said burning furnace (30).

10. The system as set forth in claim 4,
wherein a fuel supply port is provided in vicinity of said gas inlet in the peripheral wall of said calciner (20).

11. The system as set forth in claim 4,
wherein two or more of said gasification furnaces (1) are provided, and two or more of gas transport paths (6) for transporting the pyrolysis gas from respective gasification furnaces (1) are individually in communication with two or more of the gas inlets (27) provided in the peripheral wall of said calciner (20).

12. A method of operating a system comprising a waste treatment facility (100) and a cement production facility (200) installed in a vicinity of each other, comprising the steps of:
supplying waste to a gasification furnace (1);
gasifying the waste to generate a pyrolysis gas; and
transporting the pyrolysis gas generated in said gasification furnace (1) to a preheater (10) or a calciner (20) for cement in said cement production facility (200), the pyrolysis gas containing entrained char and ash;
**characterized in that**
a ratio of a flow rate of the pyrolysis gas from said gasification furnace (1) to a flow rate of an exhaust gas discharged from said preheater (10) or a calciner (20) is adjusted to be 0.3 or lower by an input of the waste to said gasification furnace.

13. The method as set forth in claim 12,
wherein the pyrolysis gas is transported from said gasification furnace (1) to said calciner (20), and the input of the waste is adjusted according to a pressure of at least one of the gasification furnace (1) and said calciner (20).

## Patentansprüche

1. System umfassend eine Anlage (100) zur Abfallverarbeitung und eine Anlage (200) zur Zementproduktion, die in unmittelbarer Nähe voneinander angeordnet sind, umfassend:
einen Vergasungsofen (1), der dazu konfiguriert ist, Abfälle zu vergasen, um ein Pyrolysegas zu erzeugen;
einen Gastransportweg (6), der konfiguriert ist zum Transportieren des in dem Vergasungsofen (1) erzeugten Pyrolysegases in einen Vorheizer (10) oder eine Kalziniereinrichtung (20) für Zement in der Anlage (200) zur Zementproduktion, wobei das Pyrolysegas mitgerissene Kohle und Asche enthält,
eine Transportvorrichtung (4), die konfiguriert ist zum Zuführen der Abfälle in den Vergasungsofen (1), wobei
eine Eingabe der Abfälle in den Vergasungsofen (1) durch die Transportvorrichtung (4) dazu konfiguriert ist, angepasst zu werden, um ein Verhältnis von kleiner oder gleich 0,3 einer Strömungsrate des Pyrolysegases aus dem Vergasungsofen (1) zu einer Strömungsrate eines aus dem Vorheizer (10) oder der Kalziniereinrichtung (20) ausgestoßenen Abgases bereit zu stellen,
**dadurch gekennzeichnet, dass**
der Vergasungsofen (1) eine Zufuhrvorrichtung (7) zur Zufuhr eines Hilfsbrennstoffs in das Innere des Vergasungsofens aufweist, und
die Zufuhrvorrichtung (7) dazu konfiguriert ist, mit pulverisiertem Hilfsbrennstoff mit einem mittleren Partikeldurchmesser von 0,1 bis 3 mm versorgt zu werden.

2. System umfassend eine Anlage (100) zur Abfallverarbeitung und eine Anlage (200) zur Zementproduktion, die in unmittelbarer Nähe voneinander angeordnet sind, umfassend:
einen Vergasungsofen (1), der dazu konfiguriert ist, Abfälle zu vergasen, um ein Pyrolysegas zu erzeugen;
einen Gastransportweg (6), der konfiguriert ist zum Transportieren des in dem Vergasungsofen (1) erzeugten Pyrolysegases in einen Vorheizer (10) oder eine Kalziniereinrichtung (20) für Zement in der Anlage (200) zur Zementproduktion, wobei das Pyrolysegas mitgerissene Kohle und Asche enthält,
eine Transportvorrichtung (4), die konfiguriert ist zum Zuführen der Abfälle in den Vergasungsofen (1), wobei
eine Eingabe der Abfälle in den Vergasungsofen (1) durch die Transportvorrichtung (4) dazu konfiguriert ist, angepasst zu werden, um ein Verhältnis von kleiner oder gleich 0,3 einer Strömungsrate des Pyrolysegases aus dem Vergasungsofen (1) zu einer Strömungsrate eines aus dem Vorheizer (10) oder der Kalziniereinrichtung (20) ausgestoßenen Abgases bereit zu stellen,
**dadurch gekennzeichnet, dass**
die Kalziniereinrichtung (20) dazu konfiguriert ist, mit Abgas mit hoher Temperatur aus einem Brennofen (30) der Anlage (200) zur Zementproduktion oder einem Klinkerkühler (40) versorgt zu werden,
wobei der Gastransportweg (6) dazu konfiguriert ist, das aus dem Vergasungsofen (1) stammende Pyrolysegas in die Kalziniereinrichtung (20) zu transportieren, und
wobei die Anlage (100) zur Abfallverarbeitung ein Gaszufuhrmittel (27) umfasst, das dazu konfiguriert ist, das durch den Gastransportweg (6) kommende Pyrolysegas derart in die Kalziniereinrichtung (20) zuzuführen, dass die Strömung desselben keine direkten Interferenzen mit einer Hauptströmung des Abgases mit hoher Temperatur, das in das Innere der Kalziniereinrichtung (20) zugeführt worden ist, verursacht.

3. System gemäß Anspruch 2,
wobei die Kalziniereinrichtung (20) derart konfiguriert ist, dass das in die Kalziniereinrichtung (20) zugeführte Pyrolysegas für eine Dauer von wenigstens zwei Sekunden während der Haltezeit des Pyrolysegases in der Kalziniereinrichtung (20) bei einer Temperatur, die größer oder gleich 850 Grad ist, verbrannt wird.

4. System gemäß Anspruch 2,
wobei die Kalziniereinrichtung (20) eine zylindrische Umfangswand aufweist, und eine Hauptströmung der Abgasströmung von dem Brennofen (30) oder dem Klinkerkühler (40) dazu ausgeformt ist, von einem Ende der zylindrischen Umfangswand entlang einer Zylinderachse davon zu dem anderen Ende zu strömen, und wobei das Gaszufuhrmittel (27) einen Gaseinlass umfasst, der in der zylindrischen Umfangswand derart zur Verfügung gestellt ist, dass er zu der Umfangsrichtung ausgerichtet ist, um das Pyrolysegas derart zuzuführen, dass das zugeführte Gas in der Zylinderachse umher wirbelt.

5. System gemäß Anspruch 4,
wobei die Umfangswand der Kalziniereinrichtung (20) sich in die Längsrichtung erstreckt, und das Abgas, das aus dem Brennofen (30) oder dem Klinkerkühler (40) in das untere Ende davon eingeführt worden ist, einen nach oben gerichteten Strahlstrom bildet, und
wobei der Gaseinlass (27) dazu konfiguriert ist, das Pyrolysegas nach unten gerichtet über die horizontale Ebene mit einem Neigungswinkel von größer als 0 Grad und kleiner oder gleich 40 Grad einzuführen.

6. System gemäß Anspruch 5,
wobei der Gaseinlass (27) derart konfiguriert ist, dass das Pyrolysegas aus dem Gaseinlass (27) mit einer Strömungsgeschwindigkeit von 5 bis 30 m/s eingeführt wird.

7. System gemäß Anspruch 4,
wobei das Abgas aus dem Brennofen (30) in das untere Ende der Umfangswand der Kalziniereinrichtung (20) eingeführt wird, und
wobei ein unterer Abschnitt der Umfangswand mit einem Lufteinlass (25) zum Einführen von Verbrennungsluft versehen ist, um eine Strömung zu bilden, die in der gleichen Richtung wie die Strömungsrichtung des Pyrolysegases wirbelt, und
wobei der Gaseinlass (27) oberhalb des Lufteinlasses (25) und von diesem in einem vorbestimmten Abstand beabstandet angeordnet ist.

8. System gemäß Anspruch 7,
wobei der Lufteinlass (25) dazu konfiguriert ist, Verbrennungsluft nach unten gerichtet in einem vorbestimmten Neigungswinkel über die horizontale Ebene zuzuführen.

9. System gemäß Anspruch 7,
wobei das untere Ende der Kalziniereinrichtung (20) mit einer Leitung (21) verbunden ist, die sich nach unten erstreckt und dann gebogen ist, um eine L-Form zu bilden, um den Eingang in dem Brennofen (30) zu erreichen, und
wobei der Gaseinlass (27) in der Umfangswand der Kalziniereinrichtung (20) an einer dem Brennofen (30) gegenüberliegenden Seite zur Verfügung gestellt ist.

10. System gemäß Anspruch 4,
wobei ein Brennstoffzufuhranschluss in unmittelbarer Nähe des Gaseinlasses in der Umfangswand der Kalziniereinrichtung (20) zur Verfügung gestellt ist.

11. System gemäß Anspruch 4,
wobei zwei oder mehr Vergasungsöfen (1) zur Verfügung gestellt sind, und zwei oder mehr Gastransportwege (6) zum Transport des Pyrolysegases aus den jeweiligen Vergasungsöfen (1) einzeln mit den zwei oder mehr Gaseinlässen (27), die in der Umfangswand der Kalziniereinrichtung (20) angeordnet sind, in Verbindung stehen.

12. Verfahren zum Betrieb eines Systems umfassend eine Anlage (100) zur Abfallverarbeitung und eine Anlage (200) zur Zementproduktion, die in unmittelbarer Nähe voneinander angeordnet sind, wobei das Verfahren die folgenden Schritte umfasst:
Zuführen von Abfällen in einen Vergasungsofen (1);
Vergasen der Abfälle, um ein Pyrolysegas herzustellen; und
Transportieren des in dem Vergasungsofen (1) erzeugten Pyrolysegases in einen Vorheizer (10) oder eine Kalziniereinrichtung (20) für Zement in der Anlage (200) zur Zementproduktion, wobei das Pyrolysegas mitgerissene Kohle und Asche enthält; **dadurch gekennzeichnet, dass**
das Verhältnis der Strömungsrate des Pyrolysegases aus dem Vergasungsofen (1) zu einer Strömungsrate eines aus dem Vorheizer (10) oder einer Kalziniereinrichtung (20) ausgestoßenen Abgases derart durch eine Eingabe der Abfälle in den Vergasungsofen angepasst wird, dass es 0,3 oder weniger beträgt.

13. Verfahren gemäß Anspruch 12,
wobei das Pyrolysegas aus dem Vergasungsofen (1) in die Kalziniereinrichtung (20) transportiert wird, und die Eingabe der Abfälle gemäß dem Druck des Vergasungsofens (1) und/oder der Kalziniereinrichtung (20) angepasst wird.

## Revendications

1. Système comprenant une installation de traitement de déchets (100) et une installation de production de ciment (200) situées à proximité l'une de l'autre, comprenant :
un four de gazéification (1) conçu pour gazéifier un déchet afin de produire un gaz de pyrolyse ;
une voie de transport de gaz (6) configurée pour transporter le gaz de pyrolyse produit dans ledit four de gazéification (1) vers un préchauffeur (10) ou un four de calcination (20) pour ciment de ladite installation de production de ciment (200), le gaz de pyrolyse contenant des produits de carbonisation et des cendres entraînés ; et
un dispositif de transport (4) configuré pour apporter les déchets audit four de gazéification (1), dans lequel
une introduction des déchets dans ledit four de gazéification (1) par ledit dispositif de transport (4) est configurée pour être réglée de manière à fournir un rapport inférieur ou égal à 0,3 entre ledit débit du gaz de pyrolyse issu dudit four de gazéification (1) et le débit d'un gaz d'échappement dégagé par ledit préchauffeur (10) ou four de calcination (20),
**caractérisé en ce que**
ledit four de gazéification (1) possède un dispositif d'amenée (7) destiné à apporter un combustible auxiliaire à l'intérieur du four, et
ledit dispositif d'amenée (7) est configuré pour être alimenté en combustible auxiliaire pulvérulent d'un diamètre de particule moyen de 0,1 à 3 mm.

2. Système comprenant une installation de traitement de déchets (100) et une installation de production de ciment (200) situées à proximité l'une de l'autre, comprenant :
un four de gazéification (1) conçu pour gazéifier un déchet afin de produire un gaz de pyrolyse ;
une voie de transport de gaz (6) configurée pour transporter le gaz de pyrolyse produit dans ledit four de gazéification (1) vers un préchauffeur (10) ou un four de calcination (20) pour ciment de ladite installation de production de ciment (200), le gaz de pyrolyse contenant des produits de carbonisation et des cendres entraînés ; et
un dispositif de transport (4) configuré pour apporter les déchets audit four de gazéification (1), dans lequel
une introduction des déchets dans ledit four de gazéification (1) par ledit dispositif de transport (4) est configurée pour être réglée de manière à fournir un rapport inférieur ou égal à 0,3 entre ledit débit du gaz de pyrolyse issu dudit four de gazéification (1) et le débit d'un gaz d'échappement dégagé par ledit préchauffeur (10) ou four de calcination (20),
**caractérisé en ce que**
ledit four de calcination (20) est configuré pour être alimenté en gaz d'échappement à haute température issu d'un four de combustion (30) de ladite installation de production de ciment (200) ou d'un refroidisseur de scories (40),
dans lequel ladite voie de transport de gaz (6) est configurée pour transporter le gaz de pyrolyse issu dudit four de gazéification (1) vers ledit four de calcination (20), et
dans lequel ladite installation de traitement de déchets (100) comprend un moyen d'apport en gaz (27) configuré pour introduire le gaz de pyrolyse amené par ladite voie de transport de gaz (6) dans l'intérieur dudit four de calcination (20) de manière que son écoulement n'occasionne aucune interférence directe avec un courant principal dudit gaz d'échappement à haute température introduit dans l'intérieur dudit four de calcination (20).

3. Système selon la revendication 2,
dans lequel ledit four de calcination (20) est configuré pour que ledit gaz de pyrolyse introduit dans ledit four de calcination (20) soit brûlé à une température au moins égale ou supérieure à 850 degrés pendant au moins deux secondes pendant le séjour dudit gaz de pyrolyse dans le four de calcination (20).

4. Système selon la revendication 2,
dans lequel ledit four de calcination (20) possède une paroi périphérique cylindrique, et un courant principal de l'écoulement de gaz d'échappement issu dudit four de combustion (30) ou du refroidisseur de scories (40) est formé de manière à s'écouler d'une extrémité de la paroi périphérique cylindrique vers l'autre extrémité le long d'un sens d'un axe de cylindre de celui-ci, et dans lequel ledit moyen d'apport en gaz (27) comprend une entrée de gaz prévue dans ladite paroi périphérique cylindrique à orienter dans le sens circonférentiel pour apporter le gaz de pyrolyse de manière que le gaz fourni tourne autour dudit axe de cylindre.

5. Système selon la revendication 4,
dans lequel la paroi périphérique dudit four de calcination (20) s'étend dans le sens longitudinal, et le gaz d'échappement issu dudit four de combustion (30) ou du refroidisseur de scories (40) introduit dans le fond de celui-ci forme un écoulement forcé remontant, et
ladite entrée de gaz (27) est configurée pour introduire le gaz de pyrolyse vers le bas sur le plan horizontal avec un angle d'inclinaison supérieur à 0 degré et égal ou inférieur à 40 degrés.

6. Système selon la revendication 5,
dans lequel ladite entrée de gaz (27) est configurée pour que le gaz de pyrolyse soit introduit à partir de ladite entrée de gaz (27) à une vitesse d'écoulement de 5 à 30 m/s.

7. Système selon la revendication 4,
dans lequel le gaz d'échappement issu dudit four de combustion (30) est introduit dans le fond de la paroi périphérique dudit four de calcination (20), et
une section inférieure de la paroi périphérique est pourvue d'une entrée d'air (25) permettant d'introduire de l'air de combustion pour former un écoulement tourbillonnant dans une direction identique à la direction d'écoulement du gaz de pyrolyse, et
dans lequel ladite entrée de gaz (27) est prévue au-dessus et à l'écart de ladite entrée d'air (25), selon une distance prédéterminée.

8. Système selon la revendication 7,
dans lequel ladite entrée d'air (25) est configurée pour introduire de l'air de combustion vers le bas selon un angle d'inclinaison prédéterminé sur le plan horizontal.

9. Système selon la revendication 7,
dans lequel le fond dudit four de calcination (20) est relié à une conduite (21) qui s'étend vers le bas puis est courbée pour former un « L » pour parvenir à l'entrée du four de combustion (30), et
dans lequel ladite entrée de gaz (27) est prévue dans la paroi périphérique dudit four de calcination (20) sur un côté opposé audit four de combustion (30).

10. Système selon la revendication 4,
dans lequel une fourche d'apport en combustible est prévue à proximité de ladite entrée de gaz dans la paroi périphérique dudit four de calcination (20).

11. Système selon la revendication 4,
dans lequel deux ou plus desdits fours de gazéification (1) sont prévus, et deux ou plus de voies de transport de gaz (6) destinées au transport du gaz de pyrolyse issu des fours de gazéification (1) respectifs sont individuellement en communication avec deux ou plus d'entrées de gaz (27) prévues dans la paroi périphérique dudit four de calcination (20).

12. Procédé d'exploitation d'un système comprenant une installation de traitement de déchets (100) et une installation de production de ciment (200) situées à proximité l'une de l'autre, comprenant les étapes consistant à :
apporter des déchets à un four de gazéification (1),
gazéifier les déchets pour produire un gaz de pyrolyse ; et
transporter le gaz de pyrolyse produit dans ledit four de gazéification (1) vers un préchauffeur (10) ou un four de calcination (20) pour ciment de ladite installation de production de ciment (200), le gaz de pyrolyse contenant des produits de carbonisation et des cendres entraînés ;
**caractérisé en ce que**
un rapport entre ledit débit du gaz de pyrolyse issu dudit four de gazéification (1) et le débit d'un gaz d'échappement dégagé par ledit préchauffeur (10) ou un four de calcination (20) est réglé pour être de 0,3 ou moins, en fonction de l'introduction des déchets dans ledit four de gazéification.

13. Procédé selon la revendication 12,
dans lequel le gaz de pyrolyse est transporté dudit four de gazéification (1) vers ledit four de calcination (20), et l'introduction des déchets est réglée selon une pression d'au moins un du four de gazéification (1) et/ou dudit four de calcination (20).
